(19) Europäisches Patentamt
European Patent Office
Office européen des brevets

(11) EP 4 347 689 B1

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **22729529.2**

(22) Anmeldetag: **16.05.2022**

(51) Internationale Patentklassifikation (IPC):
***C08G 65/26*** *(2006.01)* ***C08C 19/06*** *(2006.01)*
***C08C 19/40*** *(2006.01)* ***C08G 59/02*** *(2006.01)*
***C08G 59/14*** *(2006.01)* ***C08G 59/34*** *(2006.01)*

(52) Gemeinsame Patentklassifikation (CPC):
**C08G 65/2609; C08C 19/06; C08C 19/40; C08F 136/06; C08G 59/027; C08G 59/1444; C08G 59/34**

(86) Internationale Anmeldenummer:
**PCT/EP2022/063153**

(87) Internationale Veröffentlichungsnummer:
**WO 2022/248266 (01.12.2022 Gazette 2022/48)**

(54) **HYDRIERTE POLYETHERMODIFIZIERTE POLYBUTADIENE UND VERFAHREN ZU DEREN HERSTELLUNG**

HYDRATED POLYETHER-MODIFIED POLYBUTADIENE AND METHOD FOR PRODUCING THE SAME

POLYBUTADIÈNES HYDROGÉNÉS MODIFIÉS PAR POLYÉTHER ET LEUR PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2021 EP 21176122**

(43) Veröffentlichungstag der Anmeldung:
**10.04.2024 Patentblatt 2024/15**

(73) Patentinhaber: **Evonik Operations GmbH**
**45128 Essen (DE)**

(72) Erfinder:
- **LOBERT, Matthias**
  **45309 Essen (DE)**
- **OTTO, Sarah**
  **45128 Essen (DE)**
- **URBAN, Michael**
  **45327 Essen (DE)**
- **SCHUBERT, Frank**
  **47506 Neukirchen-Vluyn (DE)**
- **HENNING, Frauke**
  **45259 Essen (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
- **QING GAO ET AL: "Facile Synthesis of Amphiphilic Heterografted Copolymers with Crystalline and Amorphous Side Chains", MACROMOLECULAR CHEMISTRY AND PHYSICS,, vol. 214, no. 15, 1 January 2013 (2013-01-01), pages 1677 - 1687, XP002799119, DOI: 10.1002/MACP.201300255**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 347 689 B1

## Beschreibung

Die vorliegende Erfindung betrifft ein Verfahren zur Herstellung von hydrierten polyethermodifizierten Polybutadienen sowie gemäß diesem Verfahren herstellbare hydrierte polyethermodifizierte Polybutadiene.

Polybutadiene mit seitständigen Polyetherresten sind bekannt und werden nach dem Stand der Technik beispielsweise durch eine Umsetzung von reaktiven, funktionalisierten Polybutadienen mit Polyethern hergestellt. So beschreiben Q. Gao et. al. in Macromolecular Chemistry and Physics (2013), 214(15), 1677-1687 amphiphile Polymer-Kammstrukturen, die durch Graften (Pfropfen) von Polyethylenglycol an eine Polybutadien-Hauptkette hergestellt werden. Gemäß JP 2011038003 werden mit Maleinsäureanhydrid-Einheiten funktionalisierte Polybutadiene mit aminoterminierten Polyethern umgesetzt. Es entstehen maleinisierte Polybutadiene mit kammständigen Polyetherresten, welche über eine Amid- oder ImidGruppe angebunden sind. In einem ähnlichen Verfahren werden gemäß J. Wang, Journal of Applied Polymer Science (2013), 128(4), 2408-2413 Polyethylenglycole unter Ausbildung einer Ester-Verknüpfung an Polybutadiene mit hohem Anteil an 1,2-Butadien-Monomereinheiten addiert. Hochmolekulare Graftpolymere mit Kammstruktur werden nach dem in JP 2002105209 offenbarten Verfahren durch eine Addition von epoxidierten Polybutadienen mit OH-funktionellen Polyethern erhalten. H. Decher et. al. nutzen gemäß Polymer International (1995), 38(3), 219-225 die Addition von Isocyanat-terminierten Polyethylenglycolen an hydroxyfunktionelle Polybutadiene.

Weiterhin sind Verfahren zur Herstellung von polyethermodifizierten Polybutadienen bekannt, bei denen hydroxyfunktionelle Polybutadiene mit Epoxidverbindungen umgesetzt werden. So ist aus dem Stand der Technik beispielsweise die Alkoxylierung von OH-terminierten Polybutadienen bekannt.

US 4994621 A beschreibt beispielsweise die Alkoxylierung von hydroxylterminierten Polybutadienen mit Ethylenoxid und Propylenoxid in Gegenwart von Tetramethylammoniumhydroxid. EP 2003156 A1 führt aus, dass die alkalisch katalysierte Alkoxylierung von OH-terminierten Polybutadienen strukturell bedingt und durch die schlechte Löslichkeit alkalischer Katalysatoren kaum möglich ist und bevorzugt stattdessen die Doppelmetallcyanid (DMC)-Katalyse. Die Verwendung OH-terminierter Polybutadiene in der Alkoxylierung führt ausschließlich zu Polyether-Polybutadien-Polyether-Triblockstrukturen. Dieser Blockaufbau ist laut EP 2003156 A1 verantwortlich für die schlechte Mischbarkeit mit anderen Reaktionskomponenten bei der Herstellung von Polyurethanen.

Neben der Alkoxylierung von OH-terminierten Polybutadienen ist auch die Alkoxylierung von seitständig hydroxyfunktionellen Polybutadienen bekannt. So beschreiben Q. Gao et. al. in Macromolecular Chemistry and Physics (2013), 214(15), 1677-1687 die Herstellung eines seitständig polyethermodifizierten Polybutadiens durch Alkoxylierung eines seitständig hydroxyfunktionellen Polybutadiens mit Ethylenoxid. Die Herstellung des dabei eingesetzten seitständig hydroxyfunktionellen Polybutadiens erfolgt zunächst durch Epoxidierung eines Polybutadiens, anschließender Umsetzung des epoxidierten Polybutadiens mit einer Lithium-Polybutadien-Verbindung und schließlich Protonierung des Reaktionsprodukts mit HClsaurem Methanol. Dieses Verfahren führt zu einem Polybutadien mit sowohl seitständigen Polyetherresten als auch seitständigen Polybutadienresten. Da hier je einem Polyetherrest immer auch ein Polybutadienrest gegenübersteht, führt dieses Verfahren zu polyethermodifizierten Polybutadienen mit niedrigen HLB-Werten (HLB ~ hydrophilic lipophilic balance). Zudem sind die polyethermodifizierten Polybutadiene im Polybutadienteil verzweigt. Polyethermodifizierte Polybutadiene mit höheren HLB-Werten und/oder unverzweigtem Polybutadienteil sind durch dieses Verfahren nicht herstellbar. Ein weiterer Nachteil des Verfahrens ist die Verwendung von metallorganischen Verbindungen (n-BuLi und Lithium-Polybutadien), die aufgrund ihrer hohen Luft- und Feuchtigkeitsempfindlichkeit besondere Anforderungen an die Prozessführung stellt. Dies erschwert die industrielle Umsetzung dieses Verfahrens.

Die chemische Modifizierung von Polybutadien mit Hilfe der Epoxidierung und Folgereaktionen ist aus der Literatur bekannt. Die Epoxidringöffnung findet meist durch eine Reaktion mit Aminen statt. JP 53117030 und DE 2943879 beschreiben die Addition von Ethanolamin bzw. Diethanolamin, EP 351135 und DE 3305964 die Umsetzung der Epoxidgruppen mit Dimethylamin. DD 206286 offenbart die Addition von primären und sekundären Aminen mit 4 bis 20 C-Atomen an epoxidierte Polybutadiene in polaren Lösemitteln. Darüber hinaus ist die Modifizierung von Polybutadien mit Fettsäuren bekannt. So beschreibt die DE 3442200 die Addition von $C_6$-$C_{22}$-Carbonsäuren an epoxidiertes Polybutadien. Eine weitere Alkoxylierung der Reaktionsprodukte wird in diesen Schriften nicht offenbart.

Amin-funktionelle Polybutadiene sind im Sinne der vorliegenden Erfindung als Startverbindungen für die Alkoxylierung weniger geeignet, da sie den Produkten einen oft unerwünschten basischen Charakter verleihen, Anlass zu Verfärbungen geben oder z.B. Alkoxylierungskatalysatoren wie Doppelmetallcyanide inhibieren.

Die Addition von Alkoholen und Wasser an epoxidiertes Polybutadien scheint laut Stand der Technik ungleich schwieriger als die Addition von Aminen und Carbonsäuren zu sein. Qing Gao et. al. beschreiben in J. Macromol. Sci., Part A: Pure and Applied Chemistry (2013), 50, 297-301 die Trifluormethansulfonsäure-katalysierte Addition von Wasser an epoxidierte Polybutadiene in THF. Die WO 2016/142249 A1 zielt auf die Herstellung glasartiger Polymere durch Addition von Wasser oder Alkoholen mit 1 bis 4 C-Atomen an die Epoxidgruppen von Polybutadien ab und beschränkt sich auf die Herstellung von OH-funktionellen Polybutadienen mit niedrigen Molmassen von 300 bis 2000 g/mol und einem hohem Gehalt von 50 % bis 80 % an 1,2-vinylischen und 1,2-cyclovinylischen Doppelbindungen.

Polybutadiene und modifizierte Polybutadiene werden vielfach als Reaktivkomponente oder Formulierungsbestandteil eingesetzt, um z.B. Polymere hydrophob auszustatten oder zu flexibilisieren und die mechanischen Eigenschaften zu verbessern. Den Einsatzmöglichkeiten alkoxylierter Polyethermodifizierter Polybutadiene sind derzeit jedoch durch die Beschränkung auf wenige verfügbare Triblockstrukturen häufig Grenzen gesetzt. Es fehlt bisher die Möglichkeit, den chemischen Aufbau der polyethermodifizierten Polybutadiene in weiten Grenzen zu variieren. Zudem gibt es kein einfaches Herstellverfahren für solche Polymere.

Die Hydrierung von ungesättigten Verbindungen im generellen und ungesättigten Polymeren wie Polybutadien-Polymeren oder Polybutadien-Isopren-Copolymeren im speziellen sind prinzipiell bekannt und können sowohl mit heterogenen als auch homogenen Katalysatoren durchgeführt werden.

Dem Fachmann geläufige Hydrierkatalysatoren sind beispielsweise vom Nickel-Typ, wie beispielsweise Raney-Nickel oder auch Palladium. Während Nickel-katalysierte Reaktionen sich meist durch eine geringe Reaktionsgeschwindigkeit auszeichnen, so erfolgt mittels Palladium-Katalyse meist eine deutlich schnellere Umsetzung.

So beschreibt DE 2459115 A1 beispielsweise die Hydrierung von Polybutadienen in Anwesenheit von geträgerten Ruthenium-Katalysatoren und DE 1248301 B die Verwendung von Cobalt-, Nickel-, Mangan-, Molybdän- und Wolfram-Verbindungen, die mittels Aluminium-Reduktionsmitteln auf inerte Trägermaterialien aufgebracht werden, als effiziente heterogene Hydrierkatalysatoren. DE 2457646 A1 beschreibt zudem einen effizienten Hydrierkatalysator auf Cobalt-Basis, hergestellt aus Co(II)-chlorid durch reduzierende Umsetzung mit Lithium-, Natrium- oder Kaliumsalzen eines Lactams.

Des Weiteren werden in DE 2637767 A1 auch Triphenylphosphin-Salze von Rhodium (Wilkinson-Katalysator), Iridium und Ruthenium als selektive Katalysatoren zur Hydrierung der 1,2-Vinyl-Anteile des Polybutadienpolymers beschrieben. Der Wilkinson-Katalysator wird darüber hinaus in EP 0279766 A1 auch vorteilhaft als Polymer-gebundener Katalysator eingesetzt.

In EP 0545844 A1 wird als homogener Katalysator ein Titanocen-Katalysator beschrieben, der durch *in situ* Reduktion mit metallorganischen Verbindungen in seine aktive Form überführt wird.

Aus dem Stand der Technik sind aber keine hydrierten polyethermodifizierten Polybutadiene und entsprechend auch keine Verfahren zu deren Herstellung bekannt.

Aufgabe der vorliegenden Erfindung war es daher hydrierte polyethermodifizierte Polybutadiene herzustellen.

Überraschenderweise wurde nun gefunden, dass ein Verfahren zur Herstellung von hydrierten polyethermodifizierten Polybutadienen, welches die folgenden Schritte umfasst, diese Aufgabe löst:

a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G);
d) Hydrierung des mindestens einen polyethermodifizierten Polybutadiens (G) zu mindestens einem hydrierten polyethermodifizierten Polybutadien (H).

Weitere Gegenstände der Erfindung und ihre vorteilhaften Ausführungsformen sind den Ansprüchen, den Beispielen und der Beschreibung zu entnehmen.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Die zahlenmittlere Molmasse $M_n$, die gewichtsmittlere Molmasse $M_w$ und die Polydispersität ($M_w/M_n$) werden im Rahmen der vorliegenden Erfindung vorzugsweise mittels Gel-Permeations-Chromatographie (GPC) bestimmt, wie in den Beispielen beschrieben.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Die Begriffe "seitständig", "seitenständig" und "kammständig" werden synonym verwendet.

Wo immer Moleküle bzw. Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Die nachfolgenden Formeln beschreiben Verbindungen oder Reste, die aus sich ggf. wiederholenden Einheiten (Wiederholungseinheiten) aufgebaut sind, wie beispielsweise sich wiederholende Fragmente, Blöcke oder Monomereinheiten, und eine Molgewichtsverteilung aufweisen können. Die Häufigkeit bzw. Anzahl der Einheiten wird durch Indizes angegeben, sofern nicht explizit anders angegeben. Die in den Formeln verwendeten Indizes sind als statistische Mittelwerte (Zahlenmittel) zu betrachten. Die verwendeten Indexzahlen sowie die Wertbereiche der angegebenen Indizes werden als Mittelwerte der möglichen statistischen Verteilung der tatsächlichen vorhandenen Strukturen und/oder deren Mischungen verstanden, sofern nicht explizit anders angegeben. Die verschiedenen Fragmente beziehungsweise Einheiten der in den nachfolgenden Formeln beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Einheiten mitumfasst. Werden also im Rahmen der vorliegenden Erfindung Verbindungen, wie z.B. Polybutadiene (A), epoxyfunktionelle Polybutadiene (C), hydroxyfunktionelle Polybutadiene (E), polyethermodifizierte Polybutadiene (G) oder hydrierte polyethermodifizierte Polybutadiene (H) beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der Erfindung ist somit ein Verfahren zur Herstellung von einem oder mehreren hydrierten polyethermodifizierten Polybutadienen, umfassend die Schritte:

a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) und zu mindestens einem polyethermodifizierten Polybutadien (G);
d) Hydrierung des mindestens einen polyethermodifizierten Polybutadiens (G) zu mindestens einem hydrierten polyethermodifizierten Polybutadien (H).

Es ist bevorzugt, dass das erfindungsgemäße Verfahren außerdem genau einen der folgenden beiden optionalen Schritte cc) und dd) umfasst:

cc) Umsetzung mindestens eines polyethermodifizierten Polybutadiens (G) ohne endverkappte Polyetherreste mit mindestens einem Endverkappungsreagenz (I) zu mindestens einem polyethermodifizierten Polybutadien (G) enthaltend endverkappte Polyetherreste;
dd) Umsetzung mindestens eines hydrierten polyethermodifizierten Polybutadiens (H) ohne endverkappte Polyetherreste mit mindestens einem Endverkappungsreagenz (I) zu mindestens einem hydrierten polyethermodifizierten Polybutadien (H) enthaltend endverkappte Polyetherreste.

Es ist also bevorzugt, dass das erfindungsgemäße Verfahren entweder Schritt cc) oder Schritt dd) oder keinen dieser beiden Schritte umfasst.

Das polyethermodifizierte Polybutadien (G) ohne endverkappte Polyetherreste wird im Folgenden auch mit (G1) bezeichnet. Das polyethermodifizierte Polybutadien (G) enthaltend endverkappte Polyetherreste wird im Folgenden auch mit (G2) bezeichnet. Sowohl (G1) also auch (G2) sind polyethermodifizierte Polybutadiene (G).

Das hydrierte polyethermodifizierte Polybutadien (H) ohne endverkappte Polyetherreste wird im Folgenden auch mit (H1) bezeichnet. Das hydrierte polyethermodifizierte Polybutadien (H) enthaltend endverkappte Polyetherreste wird im Folgenden auch mit (H2) bezeichnet. Sowohl (H1) also auch (H2) sind hydrierte polyethermodifizierte Polybutadiene (H).

Es ist bevorzugt, dass das erfindungsgemäße Verfahren außerdem den folgenden optionalen Schritt e) umfasst:
e) Farbaufhellung des mindestens einen hydrierten polyethermodifizierten Polybutadiens (H).

Die Schritte a), b), c), cc) d), dd) und e) erfolgen in eben dieser Reihenfolge, also in der Reihenfolge a), b), c), cc) d), dd) und e), wobei die Schritte cc), dd), und e) optional sind und ausgelassen werden können, wobei entweder der Schritt cc) oder der Schritt dd) oder keiner dieser beiden Schritte umfasst sind. Die Verfahrensschritte können unmittelbar aufeinander folgen. Das Verfahren kann aber auch weitere vorgelagerte Schritte, Zwischenschritte, oder nachgelagerte Schritte, wie zum Beispiel eine Aufreinigung der Edukte, der Zwischenprodukte und/oder der Endprodukte, aufweisen.

Durch das erfindungsgemäße Verfahren wird es erstmalig möglich, hydrierte polyethermodifizierte Polybutadiene zu erhalten, insbesondere lineare hydrierte Polybutadiene mit kammständigen Polyetherresten. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Hydroxylfunktionalisierung einstellbar und eröffnet eine große strukturelle Vielfalt bei den hydrierten polyethermodifizierten Polybutadienen (H).

Das im Stand der Technik bekannte Graften (Pfropfen) von Polyethern an Polybutadien erfolgt in der Praxis selten quantitativ und die Reaktionsprodukte enthalten üblicherweise freie Anteile an Polyethern und gegebenenfalls nicht funktionalisierte Polybutadiene. Die vorbeschriebene Addition von OH-funktionellen Polyethern über ihre OH-Gruppe an epoxidierte Polybutadiene geschieht ebenfalls meist unvollständig und die Produkte enthalten restliche, nicht umgesetzte Epoxidgruppen. Werden die Polyether im Überschuss eingesetzt, so lässt sich der Restgehalt an Epoxidgruppen zwar reduzieren, die Überschusspolyether verbleiben aber im Produkt, da sie destillativ nicht abgetrennt werden können.

Die erfindungsgemäß erhältlichen hydrierten Polybutadiene mit kammständigen Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen alle Polyether chemisch über eine Etherbindung an das Polybutadien angebunden. Damit unterscheiden sich die erfindungsgemäßen Verfahrensprodukte deutlich durch ihre erhöhte Reinheit von den bisher aus dem Stand der Technik bekannten Verbindungen.

Es ist dabei bevorzugt, während des erfindungsgemäßen Verfahrens zur Stabilisierung der Edukte, Intermediate und Produkte, Stabilisatoren bzw. Antioxidantien zu verwenden, um ungewollte Polymerisationsreaktionen der Doppelbindungen zu vermeiden. Hierfür eignen sich z.B. die dem Fachmann bekannten sterisch gehinderten Phenole, kommerziell erhältlich zum Beispiel als Anox® 20, Irganox® 1010 (BASF), Irganox® 1076 (BASF) und Irganox® 1135 (BASF).

Es ist ferner bevorzugt, einen oder mehrere oder alle Verfahrensschritte unter einer Inertatmosphäre, z.B. unter Stickstoff, durchzuführen. Auch ist es bevorzugst, dass das Edukt (A), wie auch die Zwischenprodukte (C), (E) und (G), sowie das Endprodukt (H), falls es nicht vollständig, sondern nur teilhydriert ist, möglichst unter Ausschluss von Luft aufzubewahren.

**Schritt a)**

Im Schritt a) des erfindungsgemäßen Verfahrens erfolgt die Umsetzung mindestens eines Polybutadiens (A) mit mindestens einem Epoxidierungsreagenz (B) zu mindestens einem epoxyfunktionellen Polybutadien (C).

Bei dieser Umsetzung werden Doppelbindungen des Polybutadiens (A) in Epoxidgruppen überführt. Verschiedene Methoden zur Epoxidierung von Polybutadienen mit z.B. Percarbonsäuren und Wasserstoffperoxid sind dem Fachmann bekannt und z.B. in CN 101538338, JP 2004346310, DD 253627 and WO 2016/142249 A1 offenbart. Besonders geeignet zur Herstellung der epoxyfunktionellen Polybutadiene (C) mit hohem Anteil an 1,4-Einheiten ist Perameisensäure, die auch *in situ* aus Ameisensäure in Gegenwart von Wasserstoffperoxid gebildet werden kann. Die Epoxidierung findet bevorzugt in einem Lösemittel wie Toluol oder Chloroform statt, das nach der Umsetzung und dem Auswaschen von evtl. Peroxidresten destillativ entfernt wird.

Die Polybutadiene (A) sind Polymere des Buta-1,3-diens. Die Polymerisation der Buta-1,3-dien-Monomere erfolgt dabei im Wesentlichen unter 1,4- und/oder 1,2-Verknüpfung. Eine 1,4-Verknüpfung führt zu sogenannten 1,4-trans-Einheiten und/oder 1,4-cis-Einheiten, die zusammengefasst auch als 1,4-Einheiten bezeichnet werden. Eine 1,2-Verknüpfung führt zu sogenannten 1,2-Einheiten. Die 1,2-Einheiten tragen eine Vinylgruppe und werden auch als vinylische 1,2-Einheiten bezeichnet. Die 1,2-Einheiten werden im Rahmen der vorliegenden Erfindung auch mit "(X)", die 1,4-trans-Einheiten mit "(Y)" und die 1,4-*cis*-Einheiten mit "(Z)" bezeichnet:

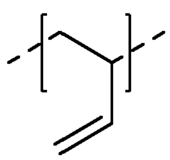

1,2-Einheit (X)

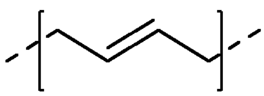

*1,4-trans*-Einheit (Y)

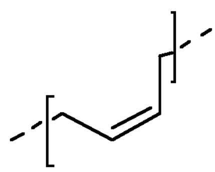

*1,4-cis*-Einheit (Z)

Die in den Einheiten enthaltenen Doppelbindungen werden analog als 1,4-*trans*-Doppelbindungen, 1,4-*cis*-Doppelbindungen beziehungsweise 1,2-Doppelbindungen oder 1,2-Vinyl-Doppelbindungen bezeichnet. Die 1,4-*trans*-Doppelbindungen und 1,4-*cis*-Doppelbindungen werden zusammenfassend auch als 1,4-Doppelbindungen bezeichnet.

Es handelt sich bei den Polybutadienen (A) also um unmodifizierte Polybutadiene. Die Polybutadiene (A) und ihre Herstellverfahren sind dem Fachmann bekannt. Die Herstellung erfolgt vorzugsweise mittels einer radikalischen, einer anionischen oder einer koordinativen Kettenpolymerisation.

Die radikalische Kettenpolymerisation wird bevorzugt als Emulsionspolymerisation durchgeführt. Dies führt zu einem statistischen Auftreten der drei genannten Einheiten. Bei niedriger Reaktionstemperatur (ca. 5 °C) sinkt der Anteil an Vinylgruppen. Die Initiierung erfolgt vorzugsweise mit Kaliumperoxodisulfat und Eisensalzen oder auch mit Wasserstoffperoxid.

Bei der anionischen Kettenpolymerisation erfolgt die Initiierung der Kettenpolymerisation vorzugsweise mit Butyllithium. Das so erhaltene Polybutadien (A) enthält etwa 40 % 1,4-*cis*-Einheiten und 50 % 1,4-*trans*-Einheiten.

Bei der koordinativen Kettenpolymerisation werden vorzugsweise Ziegler-Natta-Katalysatoren eingesetzt, insbesondere stereospezifische Ziegler-Natta-Katalysatoren, die zu einem Polybutadien (A) mit einem hohen Anteil an 1,4-cis-Einheiten führen.

Bei der Polymerisation von 1,3-Butadien können durch Neben- oder Folgereaktionen, wie z.B. einer Folgereaktion der Doppelbindungen der resultierenden 1,2- und 1,4-Einheiten des Polybutadiens, auch verzweigte Polybutadiene (A) entstehen. Bevorzugt handelt es sich bei den erfindungsgemäß eingesetzten Polybutadienen (A) aber um lineare, also unverzweigte Polybutadiene. Es ist auch möglich, dass die Polybutadiene in geringen Anteilen andere Einheiten als 1,2-Einheiten, 1,4-*trans*-Einheiten oder 1,4-*cis*-Einheiten aufweisen. Es ist aber bevorzugt, dass der Massenanteil der Summe von 1,2-Einheiten, 1,4-*trans*-Einheiten und 1,4-*cis*-Einheiten mindestens 80 %, vorzugweise mindestens 90 %, insbesondere mindestens 99% bezogen auf die Gesamtmasse des mindestens einen Polybutadiens (A), also bezogen auf die Gesamtmasse aller eingesetzten Polybutadiene (A), beträgt.

Für das erfindungsgemäße Verfahren werden vorzugsweise solche Polybutadiene (A) verwendet, die 0 % bis 80 % 1,2-Einheiten und 20 % bis 100 % 1,4-Einheiten, bevorzugter 0 % bis 30 % 1,2-Einheiten und 70 % bis 100 % 1,4-Einheiten, noch bevorzugter 0 % bis 10 % 1,2-Einheiten und 90 % bis 100 % 1,4-Einheiten, und besonders bevorzugt 0 % bis 5 % 1,2-Einheiten und 95 % bis 100 % 1,4-Einheiten bezogen auf die Summe aus 1,2-Einheiten und 1,4-Einheiten aufweisen.

Es ist also bevorzugt, dass von den Doppelbindungen aller eingesetzten Polybutadiene (A) 0 % bis 80 % 1,2-Vinyl-Doppelbindungen und 20 % bis 100 % 1,4-Doppelbindungen, bevorzugter 0 % bis 30 % 1,2-Vinyl-Doppelbindungen und 70 % bis 100 % 1,4-Doppelbindungen, noch bevorzugter 0 % bis 10 % 1,2-Vinyl-Doppelbindungen und 90 % bis 100 % 1,4-Doppelbindungen, besonders bevorzugt 0 % bis 5 % 1,2-Vinyl-Doppelbindungen und 95 % bis 100 % 1,4-Doppelbindungen sind.

Für die erfindungsgemäße Herstellung der Produkte werden entsprechend vorzugsweise Polybutadiene (A) der Formel (1)

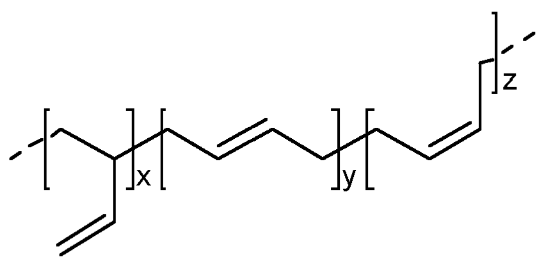

Formel (1)

mit einem Gehalt von 0 % bis 80 % 1,2-Vinyl-Doppelbindungen (Index x) und 20 % bis 100 % 1,4-Doppelbindungen (Summe der Indizes y und z), bevorzugter 0 % bis 30 % 1,2-Vinyl-Doppelbindungen und 70 % bis 100 % 1,4-Doppelbindungen, noch bevorzugter mit 0 % bis 10 % 1,2-Vinyl-Doppelbindungen und 90 % bis 100 % 1,4-Doppelbindungen, besonders bevorzugt mit 0 % bis 5 % 1,2-Vinyl-Doppelbindungen und 95 % bis 100 % 1,4-Doppelbindungen verwendet. Das Verhältnis von 1,4-trans-Doppelbindungen (Index y) und 1,4-cis-Doppelbindungen (Index z) ist beliebig.

Die Indizes x, y und z geben dabei die Anzahl der jeweiligen Butadien-Einheit im Polybutadien (A) wieder. Es handelt sich dabei um numerische Mittelwerte (Zahlenmittel) über die Gesamtheit aller Polybutadienpolymere des mindestens einen Polybutadiens (A).

Die mittlere Molmasse und Polydispersität der verwendeten Polybutadiene (A) nach Formel (1) ist beliebig.

Es ist bevorzugt, dass die zahlenmittlere Molmasse $M_n$ des mindestens einen Polybutadiens (A) von 200 g/mol bis 20000 g/mol, bevorzugter von 500 g/mol bis 10000 g/mol, besonders bevorzugt von 700 g/mol bis 5000 g/mol beträgt.

Alternativ ist es bevorzugt, dass die zahlenmittlere Molmasse $M_n$ des mindestens einen Polybutadiens (A) von 2100 g/mol bis 20000 g/mol, bevorzugter von 2200 g/mol bis 10000 g/mol, besonders bevorzugt von 2300 g/mol bis 5000 g/mol beträgt.

Es ist weiterhin bevorzugt, dass das mindestens eine Polybutadien (A) im Zahlenmittel 5 bis 360, bevorzugter 10 bis 180, besonders bevorzugt 15 bis 90 Einheiten ausgewählt aus der Gruppe bestehend aus 1,2-Einheiten, 1,4-cis-Einheiten und 1,4-trans-Einheiten aufweist.

Alternativ ist es bevorzugt, dass das mindestens eine Polybutadien (A) im Zahlenmittel 35 bis 360, bevorzugter 40 bis 180, besonders bevorzugt 45 bis 90 Einheiten ausgewählt aus der Gruppe bestehend aus 1,2-Einheiten, 1,4-cis-Einheiten und 1,4-trans-Einheiten aufweist.

Es ist weiterhin bevorzugt, dass die Viskosität der verwendeten Polybutadiene (A) 50 bis 50000 mPas, bevorzugter 100 bis 10000 mPas, besonders bevorzugt 500 bis 5000 mPas beträgt (bestimmt gemäß DIN EN ISO 3219:1994-10).

Besonders bevorzugt eingesetzte Polybutadiene sind die von Evonik Industries AG / Evonik Operations GmbH kommerziell erhältlichen Produkte Polyvest® 110 und Polyvest® 130 mit den folgenden typischen Kenndaten:

Polyvest® 110: ca. 1 % 1,2-Vinyl-Doppelbindungen, ca. 24 % 1,4-trans-Doppelbindungen, ca. 75 % 1,4-cis-Doppelbindungen, zahlenmittlere Molmasse $M_n$ ca. 2600 g/mol, Viskosität (20 °C) 700-860 mPas (gemäß DIN EN ISO 3219:1994-10),

Polyvest® 130: ca. 1 % 1,2-Vinyl-Doppelbindungen, ca. 22 % 1,4-trans-Doppelbindungen, ca. 77 % 1,4-cis-Doppelbindungen, zahlenmittlere Molmasse $M_n$ ca. 4600 g/mol, Viskosität (20 °C) 2700-3300 mPas (gemäß DIN EN ISO 3219:1994-10).

Besonders bevorzugt eingesetzte Polybutadiene sind weiterhin die von Synthomer PLC erhältlichen Produkte Lithene ultra AL und Lithene ActiV 50 mit den folgenden typischen Kenndaten:

Lithene ultra AL: ca. 40 % 1,2-Vinyl-Doppelbindungen, ca. 60 % 1,4- Doppelbindungen,

Lithene ActiV 50: ca. 70 % 1,2-Vinyl-Doppelbindungen, ca. 30% 1,4- Doppelbindungen.

Der Epoxidierungsgrad wird z.B. mit Hilfe der $^{13}C$-NMR-Spektroskopie oder der Epoxidzahl-Titration (Bestimmungen des Epoxid-Äquivalents gemäß DIN EN ISO 3001:1999) quantitativ bestimmt und kann über die Prozessbedingungen, insbesondere über die Einsatzmenge an Wasserstoffperoxid in Relation zur vorgelegten Menge an Doppelbindungen im Polybutadien, gezielt und reproduzierbar eingestellt werden.

Es ist bevorzugt, dass im Schritt a) des erfindungsgemäßen Verfahrens >0 % bis <100 %, bevorzugter >0 % bis 70 %, noch bevorzugter 1 % bis 50 %, noch bevorzugter 2 % bis 40 %, noch bevorzugter 3% bis 30 % und besonders bevorzugt 4 % bis 20 % aller Doppelbindungen des mindestens einen Polybutadiens (A) epoxidiert werden.

Es ist entsprechend bevorzugt, dass der Epoxidierungsgrad >0 % bis <100 %, bevorzugter >0 % bis 70 %, noch bevorzugter 1 % bis 50 %, noch bevorzugter 2 % bis 40 %, noch bevorzugter 3% bis 30 % und besonders bevorzugt 4 % bis 20 % beträgt.

Als Epoxidierungsreagenz (B) sind prinzipiell alle dem Fachmann bekannten Epoxidierungsmittel einsetzbar. Es ist bevorzugt, dass das Epoxidierungsreagenz (B) ausgewählt ist aus der Gruppe der Peroxycarbonsäuren (Percarbonsäuren, Persäuren), vorzugsweise aus der Gruppe bestehend aus *meta*-Chlorperbenzoesäure, Peroxyessigsäure (Peressigsäure) und Peroxyameisensäure (Perameisensäure), insbesondere Peroxyameisensäure (Perameisensäure). Die Peroxycarbonsäuren werden dabei vorzugsweise *in situ* aus der entsprechenden Carbonsäure und Wasserstoffperoxid gebildet.

Es ist besonders bevorzugt, dass das mindestens eine Epoxidierungsreagenz (B) Perameisensäure ist oder enthält, welche vorzugweise *in situ* aus Ameisensäure und Wasserstoffperoxid gebildet wird.

Die Epoxidierung des mindestens einen Polybutadiens (A) findet statistisch über die Polybutadienkette verteilt bevorzugt an den 1,4-Doppelbindungen statt. Eine Epoxidierung der 1,2-Doppelbindungen kann ebenfalls stattfinden und findet an diesen ebenfalls statistisch über die Polybutadienkette verteilt statt. Eine Epoxidierung der 1,2-Doppelbindungen ist aber gegenüber einer Epoxidierung der 1,4-Doppelbindungen benachteiligt. Das Reaktionsprodukt enthält somit epoxyfunktionelle Polybutadienpolymere, die sich in ihrem Epoxidierungsgrad voneinander unterscheiden. Alle angegebenen Epoxidierungsgrade sind daher als Mittelwerte zu verstehen.

**Schritt b)**

Im Schritt b) des erfindungsgemäßen Verfahrens erfolgt die Umsetzung des mindestens einen epoxyfunktionellen Polybutadiens (C) mit mindestens einer hydroxyfunktionellen Verbindung (D) zu mindestens einem hydroxyfunktionellen Polybutadien (E).

Bei dieser Umsetzung findet eine Addition (Additionsreaktion) der mindestens einen hydroxyfunktionellen Verbindung (D) an das mindestens eine epoxyfunktionelle Polybutadien (C) statt. Die Umsetzung erfolgt also unter Bildung von einer oder mehreren kovalenten Bindungen zwischen der mindestens einen hydroxyfunktionellen Verbindung (D) und dem mindestens einen epoxyfunktionellen Polybutadien (C). Die Umsetzung umfasst vorzugsweise (zumindest idealisiert) einen Reaktionsschritt, bei dem ein nukleophiler Angriff mindestens einer Hydroxygruppe der mindestens einen hydroxyfunktionellen Verbindungen (D) an mindestens eine Epoxygruppe des mindestens einen epoxyfunktionellen Polybutadiens (C) unter Ringöffnung dieser mindestens einen Epoxygruppe erfolgt.

Prinzipiell können im Sinne des erfindungsgemäßen Verfahrens alle Verbindungen mit mindestens einer Hydroxygruppe an die Epoxidgruppen des Polybutadiens addiert werden. Hydroxyfunktionelle Verbindungen (D) können beispielsweise aus der Gruppe bestehend aus Alkoholen, Carbonsäuren und Wasser ausgewählt werden. Bevorzugt wird die mindestens eine hydroxyfunktionelle Verbindungen (D) aus der Gruppe der monofunktionellen Alkohole mit 1 bis 6 Kohlenstoffatomen, bevorzugter aus der Gruppe der monofunktionellen Alkohole mit 2 bis 4 Kohlenstoffatomen, besonders bevorzugt aus der Gruppe bestehend aus Ethanol, 1-Propanol, Isopropanol (iso-Propanol), 1-Butanol, 2-Butanol und Isobutanol (iso-Butanol) ausgewählt. Dabei können auch beliebige Gemische dieser Alkohole eingesetzt werden. Es ist aber insbesondere bevorzugt, dass als hydroxyfunktionelle Verbindung (D) nicht Methanol eingesetzt wird. Als hydroxyfunktionelle Verbindung (D) ist auch Wasser geeignet. Wasser kann allein oder in Mischung mit einer oder mehreren anderen hydroxyfunktionellen Verbindungen (D) eingesetzt werden. So können beispielsweise Mischungen von Alkohol und Wasser oder Mischungen von Carbonsäure und Wasser im Schritt b) eingesetzt werden. Es ist also nicht nötig, die mindestens eine hydroxyfunktionelle Verbindung (D), wie beispielsweise Alkohol oder Carbonsäure, zu trocknen und von Wasser zu befreien.

Das molare Verhältnis der OH-Gruppen der hydroxyfunktionellen Verbindung (D) zu den Epoxidgruppen des epoxyfunktionellen Polybutadiens (C) kann in einem weiten Bereich variiert werden. Es ist aber bevorzugt, die hydroxyfunktionellen Verbindungen (D) bezogen auf das stöchiometrische Verhältnis von Hydroxygruppen zu den Epoxidgruppen des epoxyfunktionellen Polybutadiens (C) in einem stöchiometrischen Überschuss einzusetzen, um einen quantitativen Umsatz aller Epoxidgruppen zu erreichen. Es ist daher bevorzugt, dass im Schritt b) die Gesamtzahl der Hydroxygruppen aller hydroxyfunktionellen Verbindungen (D) zur Gesamtzahl der Epoxidgruppen aller epoxyfunktionellen Polybutadiene (C) von >1:1 bis 50:1, bevorzugter von 2:1 bis 35:1, noch bevorzugter 3:1 bis 30:1, besonders bevorzugt von 3:1 bis 25:1 beträgt. Der Überschuss an Verbindung (D) kann nach der Umsetzung z.B. destillativ entfernt und bei Bedarf wiederverwendet werden.

In einer bevorzugten Ausführungsform findet die Umsetzung in Anwesenheit mindestens eines sauren Katalysators statt. Der Katalysator ist wahlweise im Reaktionsgemisch homogen löslich oder heterogen als Feststoff darin verteilt, wie z.B. sulfonsaure Ionenaustauscher. Bevorzugt im Sinne der Erfindung sind Katalysatoren wie Schwefelsäure, Sulfonsäuren und Trifluoressigsäure, besonders bevorzugt ist Trifluormethansulfonsäure. Es ist also bevorzugt, dass im Schritt b) eine Säure, bevorzugter Schwefelsäure, Sulfonsäuren und/oder Trifluoressigsäure, besonders bevorzugt Trifluormethansulfonsäure als Katalysator eingesetzt wird.

Die Art und Einsatzmenge der Säure werden so gewählt, dass eine möglichst rasche und quantitative Addition der mindestens einen hydroxyfunktionellen Verbindung (D) an die Epoxidgruppen des mindestens einen epoxyfunktionellen Polybutadiens (C) erfolgt. Vorzugsweise wird Trifluormethansulfonsäure in einer Konzentration von 1 wppm bis 1000 wppm (wppm = Massen-ppm), besonders bevorzugt in einer Konzentration von 50 wppm bis 300 wppm bezogen auf die Reaktionsmischung eingesetzt.

Die Umsetzung des mindestens einen epoxyfunktionellen Polybutadiens (C) mit der mindestens einen hydroxyfunktionellen Verbindung (D) in Gegenwart eines sauren Katalysators findet vorzugsweise im Temperaturbereich von 20 °C bis 120 °C statt und ist nach oben durch den Siedepunkt der hydroxyfunktionellen Verbindung (D) bzw. bei Verwendung mehrerer hydroxyfunktioneller Verbindungen (D) durch den Siedepunkt der flüchtigsten hydroxyfunktionellen Verbindung (D) begrenzt. Bevorzugt wird die Umsetzung bei 50 °C bis 90 °C durchgeführt. Die Komponenten werden einige Stunden gerührt, bis die Epoxidgruppen möglichst vollständig umgesetzt sind. Die Analyse auf Epoxidgruppen kann wahlweise durch NMR-spektroskopische Analyse oder durch bekannte Methoden der Epoxidzahl-Titration erfolgen (wie in den Beispielen beschrieben). Die Reaktionsbedingungen in Schritt b) werden vorzugsweise so gewählt, dass mehr als 90 % der in Schritt a) generierten Epoxidgruppen unter Ringöffnung umgesetzt werden. Es ist besonders bevorzugt, dass im Produkt von Schritt b), also im mindestens einen hydroxyfunktionellen Polybutadien (E), keine Epoxidgruppen mehr nachweisbar sind.

Nach der Reaktion wird das saure Reaktionsgemisch neutralisiert. Zu diesem Zweck kann prinzipiell jedes basische Neutralisationsmittel zugesetzt werden. Bevorzugt wird die Neutralisation mit Natriumhydrogencarbonat, in

fester Form oder als wässrige Lösung, durchgeführt. Die gegebenenfalls überschüssigen hydroxyfunktionellen Verbindungen (D) sowie gegebenenfalls Wasser werden vorzugsweise destillativ entfernt und ausgefallene Salze werden bei Bedarf abfiltriert. Bevorzugt ist dabei die Verwendung von wässriger Natriumhydrogencarbonat-Lösung, da so farbhellere Produkte erhalten werden.

Aus jeweils einer Epoxidgruppe eines epoxyfunktionellen Polybutadiens (C) resultiert nach Ringöffnung durch eine hydroxyfunktionelle Verbindung (D) der Formel A-OH eine Wiederholungseinheit der Formel (2a), (2b) oder (2c):

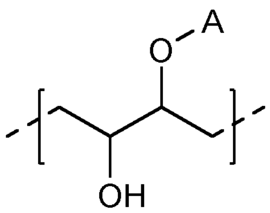

Formel (2a)

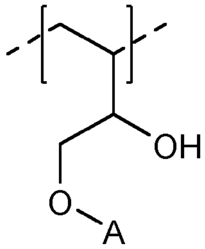

Formel (2b)

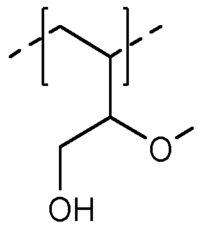

Formel (2c)

A ist dabei vorzugsweise ein einbindiger organischer Rest, der auch weitere Hydroxygruppen tragen kann, oder ein Wasserstoffradikal. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Im Fall von Wasser als hydroxyfunktionelle Verbindung (D) ist A ein Wasserstoffradikal, also A = H. Wird beispielsweise eine Carbonsäure als hydroxyfunktionelle Verbindung (D) eingesetzt, so ist A ein Acylrest. Es resultiert also aus jeder umgesetzten Epoxidgruppe mindestens eine seitständige OH-Gruppe. Ist, wie im Fall von Wasser, A = H so resultieren aus jeder umgesetzten Epoxidgruppe genau zwei seitständige OH-Gruppen. In allen anderen Fällen, also A $\neq$ H, resultiert aus jeder umgesetzten Epoxidgruppe genau eine seitständige OH-Gruppe.

Im Falle der erfindungsgemäß bevorzugten Polybutadiene (A) mit einem überwiegenden Anteil von 1,4-Einheiten, überwiegen von den Einheiten der Formeln (2a), (2b) und (2c) solche der Formel (2a).

Es ist bevorzugt, dass das mindestens eine hydroxyfunktionelle Polybutadien (E) 20 % bis 100 %, bevorzugter 70 % bis 100 %, noch bevorzugter 90 % bis 100 %, besonders bevorzugt 95 % bis 100% Einheiten der Formel (2a) bezogen auf die Summe der Einheiten der Formeln (2a), (2b) und (2c) aufweist.

Es ist weiterhin bevorzugt, dass der Anteil der Einheiten der Formeln (2a), (2b) und (2c) zusammengenommen von >0 % bis <100 %, bevorzugter >0 % bis 70 %, noch bevorzugter 1 % bis 50 %, noch bevorzugter 2 % bis 40 %, noch bevorzugter 3% bis 30 % und besonders bevorzugt 4 % bis 20 % bezogen auf die Gesamtzahl aller Einheiten des mindestens einen hydroxyfunktionellen Polybutadiens (E) beträgt. Es ist entsprechend bevorzugt, dass der Hydroxylierungsgrad >0 % bis <100 %, bevorzugter >0 % bis 70 %, noch bevorzugter 1 % bis 50 %, noch bevorzugter 2 % bis 40 %, noch bevorzugter 3% bis 30 % und besonders bevorzugt 4 % bis 20 % beträgt. Bei vollständiger Umsetzung in Schritt b) entspricht der Hydroxylierungsgrad des hydroxyfunktionellen Polybutadiens (E) dem Epoxidierungsgrad des entsprechenden epoxyfunktionellen Polybutadiens (C).

**Schritt c)**

Im Schritt c) des erfindungsgemäßen Verfahrens erfolgt die Umsetzung des mindestens einen hydroxyfunktionellen Polybutadiens (E) mit mindestens einer epoxyfunktionellen Verbindung (F) zu mindestens einem polyethermodifizierten Polybutadien (G).

Das mindestens eine hydroxyfunktionelle Polybutadien (E) aus Schritt b) dient im Schritt c) als Startverbindung für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die OH-Gruppen des mindestens einen hydroxyfunktionellen Polybutadiens (E) addiert. Dies führt zur Bildung der Polybutadiene mit kammständigen (seitständigen) Polyetherketten, also zur Bildung des mindestens einen polyethermodifizierten Polybutadiens (G). Vorzugsweise ist das polyethermodifizierte Polybutadien (G) ein lineares Polybutadien, das kammständig (seitständig) mit Polyetherresten modifiziert ist. Es ist also bevorzugt, dass das polyethermodifizierte Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxyfunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der

Gruppe der Alkylenoxide, bevorzugter aus der Gruppe der Alkylenoxide mit 2 bis 18 Kohlenstoffatomen, noch bevorzugter aus der Gruppe der Alkylenoxide mit 2 bis 8 Kohlenstoffatomen, besonders bevorzugt aus der Gruppe bestehend aus Ethylenoxid, Propylenoxid, 1-Butylenoxid, *cis*-2-Butylenoxid, *trans*-2-Butylenoxid, Isobutylenoxid und Styroloxid ausgewählt ist; und/oder dass die mindestens eine im Schritt c) eingesetzte epoxyfunktionelle Verbindung aus der Gruppe der Glycidylverbindungen, bevorzugter aus der Gruppe der monofunktionellen Glycidylverbindungen, besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, $C_{12}/C_{14}$-Fettalkoholglycidylether und $C_{13}/C_{15}$-Fettalkoholglycidylether ausgewählt ist.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die OH-Gruppen des mindestens einen vorgelegten hydroxyfunktionellen Polybutadiens (E) aus Schritt b) gesteuert werden.

Die polyethermodifizierten Polybutadiene (G) und entsprechend auch die daraus hergestellten hydrierten polyethermodifizierten Polybutadiene (H) sind vorzugsweise dadurch gekennzeichnet, dass sie gemäß den Formeln (3a), (3b) und (3c) über eine Ethergruppe an das Polybutadiengerüst gebundene Reste B enthalten,

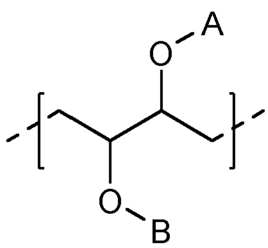

Formel (3a)

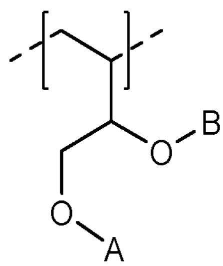

Formel (3b)

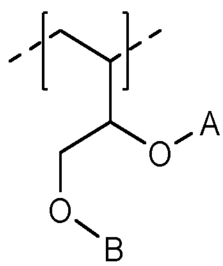

Formel (3c)

Wie oben zu Schritt b) ausgeführt wurde, stammt der Rest A in den Formeln (3a), (3b) und (3c) aus der Verbindung A-OH, also der im Schritt b) eingesetzten hydroxyfunktionellen Verbindung (D). Wie ebenfalls oben ausgeführt wurde, sind im Schritt b) zwei Fälle zu unterscheiden, nämlich $A \neq H$ oder $A = H$. Im ersten Fall, also für $A \neq H$, ist der Rest A in den Formeln (3a), (3b) und (3c) identisch mit dem Rest A in den Formeln (2a), (2b) und (2c). Im zweiten Fall, also für A = H, ist der Rest A in den Formeln (3a), (3b) und (3c) jeweils unabhängig voneinander H oder ein Rest B. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Wird beispielsweise eine Carbonsäure als hydroxyfunktionelle Verbindung (D) eingesetzt, so ist A ein Acylrest. Wird jedoch Wasser als hydroxyfunktionelle Verbindung (D) eingesetzt, so ist A in den Formeln (3a), (3b) und (3c) im Falle der Umsetzung mit einer oder mehreren epoxyfunktionellen Verbindung (F) ein Rest B, im Falle der Nichtumsetzung bleibt A Wasserstoff. Es resultiert also aus jeder umgesetzten seitständigen Hydroxygruppe genau ein seitständiger Rest -O-B. Der Rest B ist wiederum aus einem oder mehreren Monomeren, vorzugsweise aus mehreren Monomeren, der mindestens einen eingesetzten epoxyfunktionellen Verbindung (F) aufgebaut.

Im Sinne der Erfindung können prinzipiell alle dem Fachmann bekannten Alkoxylierungskatalysatoren eingesetzt werden, z.B. basische Katalysatoren wie Alkalihydroxide, Alkalialkoholate, Amine, Guanidine, Amidine, Phosphorverbindungen wie Phosphine (z.B. Triphenylphosphin), darüber hinaus Brønsted-saure und Lewis-saure Katalysatoren wie $SnCl_4$, $SnCl_2$, $SnF_2$, $BF_3$ und $BF_3$-Komplexe, sowie Doppelmetallcyanid (DMC)-Katalysatoren. Auf die Zugabe eines Alkoxylierungskatalysators kann gegebenenfalls verzichtet werden.

Vor der Epoxidzufuhr, also vor der Zugabe der mindestens einen eingesetzten epoxyfunktionellen Verbindung (F), wird der mit dem Starter und optional dem Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten

Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxyfunktionelle Polybutadien (E) oder es kann auch ein bereits entsprechend dem erfindungsgemäßen Verfahren hergestelltes polyethermodifiziertes Polybutadien (G) als Starter eingesetzt werden, wie weiter unten beschrieben wird.

**DMC-Katalyse**

Vorzugsweise werden Zink/Cobalt-DMC-Katalysatoren eingesetzt, insbesondere solche, die Zinkhexacyanocobaltat(III) enthalten. Vorzugsweise werden die in US 5,158,922, US 20030119663, WO 01/80994 beschriebenen DMC-Katalysatoren eingesetzt. Die Katalysatoren können amorph oder kristallin sein.

Es ist bevorzugt, dass die Katalysatorkonzentration von >0 wppm bis 1000 wppm, bevorzugter bei > 0 wppm bis 700 wppm, besonders bevorzugt bei 10 wppm bis 500 wppm bezogen auf die Gesamtmasse der entstehenden Produkte beträgt.

Vorzugsweise wird der Katalysator nur einmal in den Reaktor dosiert. Dieser sollte vorzugsweise sauber, trocken und frei von basischen Verunreinigungen sein, die den DMC-Katalysator inhibieren könnten. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der OH-funktionelle Starter als Suspensionsmittel.

Um die DMC-katalysierte Umsetzung zu starten, kann es vorteilhaft sein, den Katalysator zunächst mit einer Portion der mindestens einen epoxyfunktionellen Verbindung (F), vorzugsweise ausgewählt aus der Gruppe der Alkylenoxide, insbesondere mit Propylenoxid und/oder Ethylenoxid, zu aktivieren. Nach Anspringen der Alkoxylierungsreaktion kann mit der kontinuierlichen Monomerzugabe begonnen werden.

Die Reaktionstemperatur im Falle einer DMC-katalysierten Umsetzung in Schritt c) beträgt bevorzugt von 60 °C bis 200 °C, bevorzugter von 90 °C bis 160 °C und besonders bevorzugt von 100 °C bis 140 °C.

Der Innendruck des Reaktors im Falle einer DMC-katalysierten Umsetzung in Schritt c) beträgt bevorzugt von 0,02 bar bis 100 bar, bevorzugter von 0,05 bar bis 20 bar, besonders bevorzugt von 0,1 bar bis 10 bar (absolut).

Besonders bevorzugt wird eine DMC-katalysierte Umsetzung in Schritt c) bei einer Temperatur von 100 °C bis 140 °C und einem Druck von 0,1 bar bis 10 bar durchgeführt.

Die Umsetzung kann z.B. zwecks Viskositätserniedrigung in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen (also Beibehaltung z.B. der Temperatur) ohne Zugabe von Edukten durchgeführt werden. Der DMC-Katalysator verbleibt üblicherweise im Reaktionsgemisch.

Nicht abreagierte Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Das fertige Produkt wird abschließend bei <100 °C filtriert, um evtl. vorhandene Trübstoffe zu entfernen.

**Basische Katalyse**

Alternativ zu den DMC-Katalysatoren können im Schritt c) auch basische Katalysatoren verwendet werden. Geeignet sind insbesondere Alkalimetallalkoholate wie Natriummethanolat und Kaliummethanolat, die als Feststoff oder in Form ihrer methanolischen Lösungen zugefügt werden. Darüber hinaus können alle Alkalihydroxide, insbesondere Natriumhydroxid und/oder Kaliumhydroxid eingesetzt werden, und zwar sowohl als Feststoff als auch als z.B. wässrige oder alkoholische Lösungen. Darüber hinaus können erfindungsgemäß auch basische Stickstoffverbindungen, bevorzugt Amine, Guanidine und Amidine, besonders bevorzugt tertiäre Amine wie Trimethylamin und Triethylamin verwendet werden.

Es ist bevorzugt, die basischen Katalysatoren in einer Konzentration von >0 mol-% bis 100 mol-%, bevorzugter >0 mol-% bis 50 mol-%, besonders bevorzugt 3 mol-% bis 40 mol-% bezogen auf die Menge der OH-Gruppen des Starters einzusetzen.

Die Reaktionstemperatur im Falle einer basisch katalysierten Umsetzung in Schritt c) beträgt bevorzugt von 80 °C bis 200 °C, bevorzugter von 90 °C bis 160 °C und besonders bevorzugt von 100 °C bis 160 °C.

Der Innendruck des Reaktors im Falle einer basisch katalysierten Umsetzung in Schritt c) beträgt bevorzugt 0,2 bar bis 100 bar, bevorzugter 0,5 bar bis 20 bar, besonders bevorzugt 1 bar bis 10 bar (absolut).

Besonders bevorzugt wird die basisch katalysierte Umsetzung in Schritt c) bei einer Temperatur von 100 °C bis 160 °C und einem Druck von 1 bar bis 10 bar durchgeführt.

Die Umsetzung kann optional in einem geeigneten Lösemittel durchgeführt werden. Nach Beendigung der Epoxidaddition folgt vorzugsweise eine Nachreaktion zur Vervollständigung des Umsatzes. Die Nachreaktion kann z.B. durch Weiterreaktion bei Reaktionsbedingungen ohne Zugabe von Edukten durchgeführt werden. Nicht abreagierte

Epoxide und eventuell weitere flüchtige Bestandteile können nach erfolgter Umsetzung durch Vakuumdestillation, Wasserdampf- oder Gasstrippen oder andere Methoden der Desodorierung entfernt werden. Flüchtige Katalysatoren, wie z.B. flüchtige Amine, werden dabei entfernt.

Zur Neutralisation der basischen Rohprodukte werden Säuren wie Phosphorsäure oder Schwefelsäure oder Carbonsäuren wie Essigsäure und Milchsäure zugefügt. Bevorzugt ist der Einsatz wässriger Phosphorsäure und Milchsäure. Die Einsatzmenge der jeweiligen Säure richtet sich nach der zuvor verwendeten Menge an basischem Katalysator. Das basische Polybutadien mit seitständigen Polyetherresten wird in Gegenwart der Säure bei vorzugsweise 40 °C bis 95 °C gerührt und anschließend in einer Vakuumdestillation bei <100 mbar und 80 °C bis 130 °C trocken destilliert. Das neutralisierte Produkt wird abschließend vorzugsweise bei <100 °C filtriert, um ausgefällte Salze zu entfernen.

Es ist bevorzugt, dass die erfindungsgemäßen Endprodukte einen Wassergehalt von <0,2 % (angegeben als Massenanteil bezogen auf die Gesamtmasse des Endprodukts) und eine Säurezahl von <0,5 mg KOH/g haben und praktisch phosphatfrei sind.

**Produkte als Starter**

Nicht immer ist es möglich, die gewünschte Molmasse des Endpropdukts in nur einem einzigen Reaktionsschritt, insbesondere Alkoxylierungsschritt, zu erreichen. Besonders, wenn lange Polyetherseitenketten angestrebt werden und/oder der Starter aus Schritt b) eine hohe OH-Funktionalität aufweist, müssen große Mengen an Epoxidmonomeren addiert werden. Dies lässt die Reaktorgeometrie manchmal nicht zu. Die polyethermodifizierten Polybutadiene (G) aus Schritt c) tragen an den Enden ihrer seitständigen Polyetherreste jeweils eine OH Gruppe und eignen sich daher ihrerseits als Starter für den Aufbau höhermolekularer Folgeprodukte. Sie stellen im Sinne der Erfindung Vorprodukte und Startverbindungen für die Synthese von Polybutadienen mit längeren Polyetherresten dar. Die Umsetzung der mindestens einen epoxyfunktionellen Verbindung (F) kann in Schritt c) also in mehreren Teilschritten erfolgen.

Ein mit Hilfe der DMC-Katalyse gemäß Schritt c) hergestelltes Produkt kann erfindungsgemäß wahlweise mittels DMC-Katalyse oder unter Einsatz einer der vorgenannten basischen oder sauren Katalysatoren durch erneute Addition von Epoxidmonomeren aufalkoxyliert werden. Optional kann weiterer DMC-Katalysator zugefügt werden, um z.B. die Reaktionsgeschwindigkeit bei der Kettenverlängerung zu steigern.

Ebenso kann ein unter Basenkatalyse hergestelltes Produkt aus Schritt c) wahlweise basisch, sauer oder mittels DMC-Katalyse zu höheren Molmassen alkoxyliert werden. In Schritt c) wird vorteilhaft auf die Neutralisation verzichtet, wenn beabsichtigt ist, das basische Vorprodukt weiter basenkatalysiert mit Monomeren umzusetzen. Optional kann weiterer basischer Katalysator zugefügt werden, um z.B. die Reaktionsgeschwindigkeit bei der Kettenverlängerung zu steigern.

**Schritt d)**

Im erfindungsgemäßen Verfahrensschritt d) erfolgt die Hydrierung des mindestens einen polyethermodifizierten Polybutadiens (G) zu mindestens einem hydrierten polyethermodifizierten Polybutadien (H).

Dabei werden die C-C-Doppelbindungen des Polybutadiens (G) teilweise oder vollständig hydriert. Die C-C-Doppelbindungen werden also teilweise oder vollständig in C-C-Einfachbindungen umgewandelt.

Eine Wiederholungseinheit (X) wird im Falle ihrer Hydrierung zu einer Wiederholungseinheit (V) und eine Wiederholungseinheit (Y) bzw. (Z) entsprechend zu einer Wiederholungseinheit (W) umgesetzt:

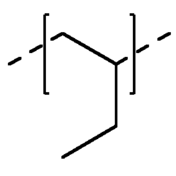

(V)

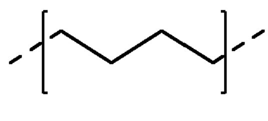

(W)

Vorzugsweise werden dabei mindestens 30 %, bevorzugter mindestens 60 %, noch bevorzugter mindestens 90 %, besonders bevorzugt mindestens 95 % der im polyethermodifizierten Polybutadien (G) enthaltenen Doppelbindungen hydriert. Die Bestimmung des Hydrierungsgrades erfolgt vorzugsweise mit Hilfe der $^1$H-NMR-Spektroskopie, insbesondere wie in den Beispielen beschrieben.

Es ist weiterhin bevorzugt, dass bei der Hydrierung Lösungsmittel eingesetzt werden, da die hydrierten polyethermodifizierten Polybutadiene (H) meist hohen Viskositäten aufweisen. Vorteilhaft einsetzbare Lösungsmittel

sind z.B. Wasser, Alkane, Isoalkane, Cycloalkane, Alkylaromaten, Alkohole, Ether und/oder Ester, allein oder in Mischung. Vorteilhaft einsetzbare Alkane sind beispielsweise *n*-Hexan, *n*-Heptan, *n*-Octan, *n*-Nonan, *n*-Decan, *n*-Undecan und/oder *n*-Dodecan. Vorteilhaft einsetzbare Cycloalkane sind beispielsweise Cyclohexan, Methylcyclohexan, Cycloheptan, Cyclooctan, Cyclononan, Cyclodecan, Cycloundecan, Cyclododecan und/oder Decalin. Vorteilhaft einsetzbare Alkylaromaten sind Toluol, Xylol, Cumol, *n*-Propylbenzol, Ethylmethylbenzol, Trimethylbenzol, Solvent Naphtha und/oder jegliche großtechnisch verfügbare Alkylbenzole. Vorteilhaft einsetzbare Alkohole sind beispielsweise n-Propylalkohol, Isopropylalkohol und *n*-Butylalkohol. Ein vorteilhaft einsetzbarer Ether ist beispielsweise Tetrahydrofuran und vorteilhaft einsetzbare Ester sind beispielsweise Ethylacetat und Butylacetat. Besonders vorteilhaft einsetzbar sind aromatische Lösungsmittel wie Toluol, Xylol und Cumol oder hochsiedende Ester wie Butylacetat, insbesondere bevorzugt werden Xylol und/oder Butylacetat eingesetzt. Die vorteilhaft einsetzbare Menge an Lösungsmittel ist vom Fachmann leicht dem konkreten Anwendungsfall anzupassen. Bevorzugt werden zwischen 0 und 90 Gew.-% Lösungsmittel bezogen auf die Gesamtmasse aus polyethermodifizierten Polybutadienen (G) und Lösungsmittel eingesetzt, bevorzugter zwischen 0 und 80%, noch bevorzugter zwischen 25 und 75% und insbesondere bevorzugt zwischen 40 und 60%.

Die Hydrierung kann vorteilhaft in einem Druckautoklaven durchgeführt werden. Durch die Aufgabe (Zugabe) von Wasserstoff in das geschlossenes Reaktionsgefäß wird dabei ein Überdruck, also ein gegenüber dem Atmosphärendruck erhöhter Druck, erzeugt. Bevorzugte Drücke liegen zwischen 1 bar und 100 bar, bevorzugter zwischen 2 bar und 50 bar, besonders bevorzugt zwischen 3 bar und 10 bar.

Weiterhin vorteilhaft durchführbar ist die Hydrierung auch im sogenannten Blubber-Verfahren. Bei diesem Verfahren wird das Reaktionsgemisch in einem offenen Reaktionsgefäß durchgeführt, wobei kontinuierlich unter Spiegel Wasserstoff eingeleitet wird. In diesem Fall wird die Hydrierung also unter Atmosphärendruck durchgeführt.

Unabhängig davon, ob die Hydrierung unter Atmosphärendruck oder unter Überdruck durchgeführt wird, ist es bevorzugt, für eine ausreichend gute Durchmischung des Reaktionssystems zu sorgen.

Die Temperatur ist bei der Hydrierung in weiten Bereichen variierbar und wird dem konkreten Reaktionssystem aus Katalysator und polyethermodifizierten Polybutadien (G) angepasst. Es ist bevorzugt, dass die Temperatur zwischen 25°C und 200°C, bevorzugter zwischen 60°C und 175°C und besonders bevorzugt zwischen 100°C und 150°C liegt.

Es ist bevorzugt, dass die Hydrierung mit Wasserstoff in Gegenwart mindestens eines Hydrierkatalysators durchgeführt wird.

Als Katalysatoren können prinzipiell alle dem Fachmann bekannten Hydrierkatalysatoren allein oder in Mischung mehrerer Katalysatoren eingesetzt werden. Der Einsatz von homogenen und/oder heterogenen Katalysatoren kann vorteilhaft sein, der Einsatz heterogener Katalysatoren ist aufgrund der leichteren Entfernbarkeit nach erfolgter Hydrierung bevorzugt.

Bevorzugt einsetzbare Edelmetallkatalysatoren sind beispielsweise auf Basis von Platin, Palladium, Rhodium, Iridium und Ruthenium. Vorteilhafte Nichtedelmetallkatalysatoren sind beispielsweise auf Basis von Nickel, Kupfer, Cobalt, Mangan, Molybdän, Wolfram und/oder Titan. Alle Katalysatoren können in geträgerter Form oder pur (also ungeträgert) eingesetzt werden.

Weiter bevorzugt sind Hydrierkatalysatoren auf Basis von Nickel, Palladium, Rhodium und/oder Ruthenium. Noch bevorzugter werden Raney-Nickel, Palladium auf Aktivkohle, Ruthenium auf Aktivkohle oder Rhodium als Wilkinson-Katalysator (Chloridotris(triphenylphosphin)rhodium(I)) eingesetzt. Besonders bevorzugt wird Raney-Nickel, Palladium auf Aktivkohle und/oder der Wilkinson-Katalysator als Hydrierkatalysator verwendet. Wenn Mischungen von zwei oder mehr der vorgenannten Hydrierkatalysatoren verwendet werden, dann ist eine Mischung von Raney-Nickel und Palladium auf Aktivkohle bevorzugt.

Die Menge des eingesetzten Katalysators kann dem jeweiligen Anwendungsfall angepasst werden. Die eingesetzte Menge wird mindestens so gewählt, dass eine Hydrierung stattfinden kann. Die Menge des eingesetzten Katalysators beträgt bevorzugt zwischen 0,1 Gew.-% und 10 Gew.-%, bevorzugter zwischen 0,2 Gew.-% und 7 Gew.-%, besonders bevorzugt zwischen 0,3 Gew.-% und 5 Gew.-% bezogen auf die eingesetzte Menge des zu hydrierenden, polyethermodifizierten Polybutadiens (G).

Nach beendeter Hydrierung wird das Reaktionsgemisch vorzugsweise filtriert, um enthaltene Feststoffe wie beispielsweise den heterogenen Katalysator zu entfernen. Je nach Viskosität des Reaktionsgemisches kann es vorteilhaft sein, das Reaktionsgemisch vor der Filtration mit einem geeigneten Lösungsmittel bevorzugt Butylacetat oder Xylol, zu verdünnen.

Das nach der Filtration erhaltene Filtrat wird abschließend destilliert, um leichter flüchtige Bestandteile wie beispielsweise enthaltenes Lösungsmittel zu entfernen und das erfindungsgemäße reine hydrierte polyethermodifizierte Polybutadien (H) zu isolieren.

**Optionale Schritte cc) und dd)**

In einem optionalen Schritt cc) kann das mindestens eine polyethermodifizierte Polybutadien (G) ohne endverkappte Polyetherreste mit mindestens einem Endverkappungsreagenz (I) zu mindestens einem polyethermodifizierten Polybutadien (G) enthaltend endverkappte Polyetherreste umgesetzt werden.

Im Schritt cc) kann also das mindestens eine polyethermodifizierte Polybutadien ohne endverkappte Polyetherreste (G1) mit mindestens einem Endverkappungsreagenz (I) zu mindestens einem polyethermodifizierten Polybutadien enthaltend endverkappte Polyetherreste (G2) umgesetzt werden.

Alternativ zum optionalen Schritt cc) kann in einem optionalen Schritt dd) das mindestens eine hydrierte polyethermodifizierte Polybutadien (H) ohne endverkappte Polyetherreste mit mindestens einem Endverkappungsreagenz (I) zu mindestens einem hydrierten polyethermodifizierten Polybutadien (H) enthaltend endverkappte Polyetherreste umgesetzt werden.

Im Schritt dd) kann also das mindestens eine hydrierte polyethermodifizierte Polybutadien ohne endverkappte Polyetherreste (H1) mit mindestens einem Endverkappungsreagenz (I) zu mindestens einem polyethermodifizierten Polybutadien enthaltend endverkappte Polyetherreste (H2) umgesetzt werden.

Unter "endverkappten Polyetherresten" werden solche Polyetherreste verstanden, die keine Hydroxygruppen aufweisen.

Im den Schritten cc) und dd) werden die Reste B der Polybutadiene (G1) bzw. (H1), welche terminal Hydroxygruppen aufweisen, vorzugsweise zu Ester-, Ether-, Urethan- und/oder Carbonatgruppen umgesetzt. Die Endverkappung von Polyethern ist dem Fachmann bekannt, wie z.B. die Veresterung mit Carbonsäuren oder Carbonsäureanhydriden, insbesondere die Acetylierung mit Hilfe von Essigsäureanhydrid, die Veretherung mit halogenierten Kohlenwasserstoffen, insbesondere die Methylierung mit Methylchlorid nach dem Prinzip der Williamson-Ether-Synthese, die Urethanisierung durch Reaktion der OH-Gruppen mit Isocyanaten, insbesondere mit Monoisocyanaten wie Stearylisocyanat und die Carbonatisierung durch Umsetzung mit Dimethylcarbonat und Diethylcarbonat.

**Optionaler Schritt e)**

In einem optionalen Schritt e) kann das mindestens eine hydrierte polyethermodifizierte Polybutadien (H) farblich aufgehellt werden.

Das hydrierte polyethermodifizierte Polybutadien (H) kann dabei ein polyethermodifiziertes Polybutadien ohne endverkappte Polyetherreste (H1) und/oder ein polyethermodifiziertes Polybutadien mit endverkappten Polyetherresten (H2) sein.

Die Farbaufhellung kann beispielsweise durch den Zusatz von Aktivkohle, vorzugsweise in einem geeigneten Lösemittel, oder durch die Behandlung mit Wasserstoffperoxid erfolgen. Die Farbaufhellung kann bevorzugt über die Gardner-Farbzahl (bestimmt gemäß DIN EN ISO 4630) ermittelt werden. Es ist dabei bevorzugt, dass sich die Gardner-Farbzahl des hydrierten polyethermodifizierten Polybutadiens (H) durch die Farbaufhellung um mindestens 1, vorzugsweise um mindestens 2 verringert.

**Hydrierte polyethermodifizierte Polybutadiene**

Gegenstand der vorliegenden Erfindung sind ferner hydrierte, kammständig (seitständig) mit Polyetherresten modifizierte Polybutadiene, wie sie durch das erfindungsgemäße Verfahren hergestellt werden können.

Ein weiterer Gegenstand der Erfindung ist daher ein hydriertes polyethermodifiziertes Polybutadien (H) erhältlich nach dem erfindungsgemäßen Verfahren.

Vorzugsweise ist das hydrierte polyethermodifizierte Polybutadien (H) ein lineares zumindest teilweise hydriertes Polybutadien, das kammständig (seitständig) mit Polyetherresten modifiziert ist. Es ist also bevorzugt, dass das hydrierte polyethermodifizierte Polybutadien (H) ein lineares, zumindest teilweise hydriertes Polybutadien-Rückgrat und seitständige Polyetherreste aufweist.

Ein weiterer Gegenstand der Erfindung ist ebenso ein hydriertes polyethermodifiziertes Polybutadien (H), das vorzugsweise nach dem erfindungsgemäßen Verfahren erhältlich ist, dadurch gekennzeichnet, dass das hydrierte polyethermodifizierte Polybutadien (H) Einheiten ausgewählt

sowohl aus der Gruppe bestehend aus den zweibindigen Resten (S), (T) und (U):

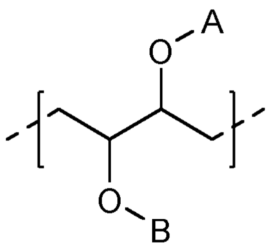

(S)

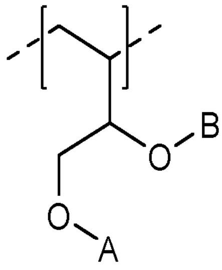

(T)

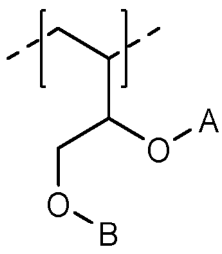

(U)

als auch aus der Gruppe bestehend aus den zweibindigen Resten (V) und (W):

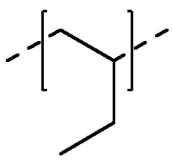

(V)

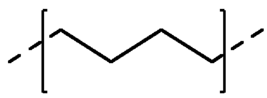

(W)

und optional aus der Gruppe bestehend aus den zweibindigen Resten (X), (Y) und (Z):

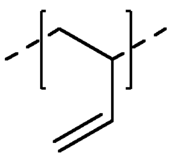

(X)

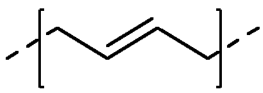

(Y)

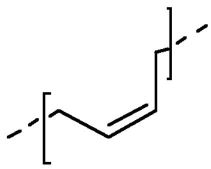

(Z)

umfasst;
wobei

A jeweils unabhängig voneinander ein einbindiger organischer Rest oder ein Wasserstoffrest ist, bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;

B jeweils unabhängig voneinander ausgewählt ist aus der Gruppe bestehend aus Resten der Formel (4a),

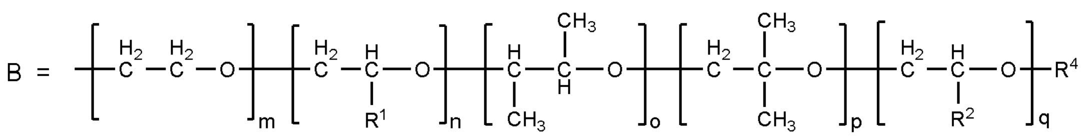

Formel (4a),

bevorzugt jeweils unabhängig voneinander ausgewählt ist aus der Gruppe bestehend aus Resten der Formel (4b),

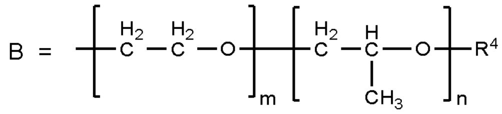

Formel (4b),

besonders bevorzugt jeweils unabhängig voneinander ausgewählt ist aus der Gruppe bestehend aus Resten der Formel (4c),

B = 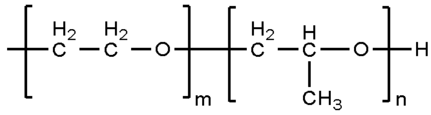

Formel (4c);

$R^1$ jeweils unabhängig voneinander ausgewählt ist aus der Gruppe bestehend aus einbindigen Kohlenwasserstoffresten mit 1 bis 16 Kohlenstoffatomen,

bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;

$R^2$ ein Rest der Formel $-CH_2-O-R^3$ ist;

$R^3$ jeweils unabhängig voneinander ausgewählt ist aus der Gruppe bestehend aus einbindigen Kohlenwasserstoffresten mit 3 bis 18 Kohlenstoffatomen;

bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
besonders bevorzugt ein tert-Butylphenylrest oder ein o-Kresylrest ist;

$R^4$ jeweils unabhängig voneinander ein einbindiger organischer Rest mit 1 bis 18 Kohlenstoffatomen oder Wasserstoff, bevorzugt Wasserstoff ist;

und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
und jede Permutation der Einheiten im Rest B, deren Anzahl mit den Indizes m, n, o, p beziehungsweise q angegeben ist, mitumfasst ist.

Die Bezeichnung "Wasserstoff" für einen Rest steht für einen Wasserstoffrest / ein Wasserstoffradikal.

Die Reste $R^1$, $R^2$, $R^3$ und $R^4$ können dabei jeweils unabhängig voneinander linear oder verzweigt, gesättigt oder ungesättigt, aliphatisch oder aromatisch, substituiert oder unsubstituiert sein.

Die allgemeine Schreibweise

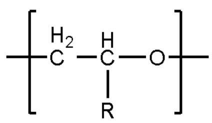

mit R = $R^1$ oder $R^2$ in Formel (4a) bzw. R = $CH_3$ in den Formeln (4b) und (4c) steht dabei sowohl für eine Einheit der Formel

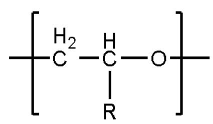

als auch eine für eine Einheit der Formel

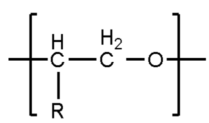
,

vorzugweise aber für eine Einheit der Formel

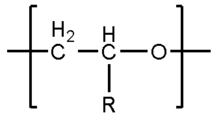

Die allgemeine Schreibweise

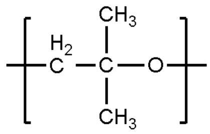

in Formel (4a) steht dabei sowohl für eine Einheit der Formel

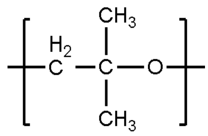

als auch eine für eine Einheit der Formel

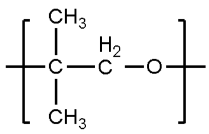

,

vorzugweise aber für eine Einheit der Formel

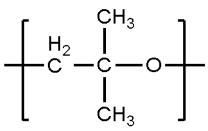

.

Es ist weiterhin bevorzugt, dass der Rest $R^4$ jeweils unabhängig voneinander ausgewählt ist aus der Gruppe bestehend aus einwertigen Kohlenwasserstoffresten mit 1 bis 18 Kohlenstoffatomen, Acylresten -C(=O)$R^5$, Urethanresten -C(=O)NH-$R^6$, Carbonatresten -C(=O)O-$R^7$ und Wasserstoff; bevorzugter ist $R^4$ jeweils unabhängig voneinander ausgewählt ist aus der Gruppe bestehend aus Alkylresten mit 1 bis 18 Kohlenstoffatomen, Alkylenresten mit 1 bis 18 Kohlenstoffatomen, Acylresten -C(=O)$R^5$, Urethanresten -C(=O)NH-$R^6$, Carbonatresten -C(=O)O-$R^7$ und Wasserstoff; besonders bevorzugt ist $R^4$ Wasserstoff.

$R^5$ ist jeweils unabhängig voneinander ein Alkyl- oder ein Alkenylrest mit 1 bis 18 Kohlenstoffatomen, bevorzugt mit 1 bis 10 Kohlenstoffatomen, besonders bevorzugt ein Methylrest.

$R^6$ ist jeweils unabhängig voneinander ein Alkyl- oder ein Arylrest mit 1 bis 18 Kohlenstoffatomen, bevorzugt mit 6 bis 18 Kohlenstoffatomen.

$R^7$ ist jeweils unabhängig voneinander ein Alkylrest mit 1 bis 18 Kohlenstoffatomen, bevorzugt mit 1 bis 2 Kohlenstoffatomen.

Es ist dabei bevorzugt, dass die Summe (die Gesamtzahl) aller Einheiten (S), (T) und (U) dividiert durch die Summe (die Gesamtzahl) aller Einheiten (S), (T), (U), (V), (W), (X), (Y) und (Z) >0 % bis <100%, bevorzugt von >0 % bis 70 %, bevorzugter von 1 % bis 50 %, noch bevorzugter von 2 % bis 40 %, noch bevorzugter von 3 % bis 30 %, besonders bevorzugt von 4 % bis 20 % beträgt. Das bedeutet, dass >0 % bis <100%, bevorzugt von >0 % bis 70 %, bevorzugter von 1 % bis 50 %, noch bevorzugter von 2 % bis 40 %, noch bevorzugter von 3 % bis 30 %, besonders bevorzugt von 4 % bis 20 % der Gesamtheit der Einheiten (S), (T), (U), (V), (W), (X), (Y) und (Z) polyethermodifiziert sind.

Es ist dabei weiterhin bevorzugt, dass die Summe (die Gesamtzahl) aller Einheiten (V), (W), (X), (Y) und (Z) dividiert durch die Summe (die Gesamtzahl) aller Einheiten (S), (T), (U), (V), (W), (X), (Y) und (Z) des mindestens einen polyethermodifizierten Polybutadiens (H) von <100 % bis >0%, bevorzugter von <100 % bis 30 %, noch bevorzugter von 99 % bis 50 %, noch bevorzugter von 98 % bis 60 %, noch bevorzugter von 97 % bis 70 %, am bevorzugtesten von 96 % bis 80 % beträgt. Das bedeutet, dass bevorzugt von <100 % bis >0%, bevorzugter von <100 % bis 30 %, noch bevorzugter von

99 % bis 50 %, noch bevorzugter von 98 % bis 60 %, noch bevorzugter von 97 % bis 70 %, am bevorzugtesten von 96 % bis 80 % der Gesamtheit der Einheiten (S), (T), (U), (V), (W), (X), (Y) und (Z) nicht polyethermodifiziert sind.

Das hydrierte polyethermodifizierte Polybutadien (H) kann teilhydriert oder vollständig hydriert sein. Es ist aber bevorzugt, dass das hydrierte polyethermodifizierte Polybutadien (H) vollständig hydriert ist. Es ist also bevorzugt, dass das hydrierte polyethermodifizierte Polybutadien (H) im Wesentlichen frei von ungesättigten Gruppen ist.

Es ist daher weiterhin bevorzugt, dass die Summe (die Gesamtzahl) aller Einheiten (V) und (W) dividiert durch die Summe (die Gesamtzahl) aller Einheiten (V), (W), (X), (Y) und (Z) des mindestens einen hydrierten polyethermodifizierten Polybutadiens (H) mindestens 30%, bevorzugter mindestens 60%, noch bevorzugter mindestens 90%, besonders bevorzugt mindestens 95% beträgt. Das bedeutet, dass mindestens 30%, bevorzugter mindestens 60%, noch bevorzugter mindestens 90%, besonders bevorzugt mindestens 95% der Gesamtheit der Einheiten (V), (W), (X), (Y) und (Z) gesättigt sind, und dass weniger als 30%, bevorzugter weniger als 40%, noch bevorzugter weniger als 10%, besonders bevorzugt weniger als 5% der Gesamtheit der Einheiten (V), (W), (X), (Y) und (Z) ungesättigt sind. Dies wird vorzugsweise mit Hilfe der $^1$H-NMR-Spektroskopie, insbesondere wie in den Beispielen beschrieben, bestimmt.

Es sei darauf hingewiesen, dass die Polyetherreste B ungesättigt sein können, z.B. wenn $R^1$ und/oder $R^3$ ein Phenylrest ist. Aromatische Gruppen werden aber vorzugsweise nicht hydriert und liegen nach der Hydrierung unverändert vor.

Die zahlenmittlere Molmasse $M_n$, gewichtsmittlere Molmasse $M_w$ und Polydispersität des Polybutadienteils des hydrierten polyethermodifizierten Polybutadiens (H) sind beliebig. Unter dem Polybutadienteil wird dabei der Teil des hydrierten polyethermodifizierten Polybutadiens (H) verstanden, der vom verfahrensgemäß eingesetzten Polybutadien (A) stammt. Die zahlenmittlere Molmasse $M_n$, gewichtsmittlere Molmasse $M_w$ und Polydispersität des Polybutadienteils des hydrierten polyethermodifizierten Polybutadiens (H) ist also identisch mit der zahlenmittleren Molmasse $M_n$, gewichtsmittleren Molmasse $M_w$ bzw. Polydispersität des Polybutadiens (A), aus dem das hydrierte polyethermodifizierte Polybutadien (H) hergestellt wurde.

Es ist bevorzugt, dass die zahlenmittlere Molmasse $M_n$ des Polybutadienteils des hydrierten polyethermodifizierten Polybutadien (H) von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse $M_n$ des Polybutadienteils des hydrierten polyethermodifizierten Polybutadien (H) von 2100 g/mol bis 20000 g/mol, bevorzugt von 2200 g/mol bis 10000 g/mol, besonders bevorzugt von 2300 g/mol bis 5000 g/mol beträgt.

Die zahlenmittlere Molmasse $M_n$ des Polybutadienteils ist dabei als die zahlenmittlere Molmasse $M_n$ des zugrundeliegenden Polybutadiens (A) definiert.

Es ist weiterhin bevorzugt, dass das hydrierte polyethermodifizierte Polybutadien (H) im Zahlenmittel 5 bis 360, besonders bevorzugt 10 bis 180, ganz besonders bevorzugt 15 bis 90 Einheiten aufweist, wobei die Einheiten aus der Gruppe bestehend aus (S), (T), (U), (V), (W), (X), (Y) und (Z) ausgewählt sind.

Alternativ ist es bevorzugt, dass das hydrierte polyethermodifizierte Polybutadien (H) im Zahlenmittel 35 bis 360, besonders bevorzugt 40 bis 180, ganz besonders bevorzugt 45 bis 90 Einheiten aufweist, wobei die Einheiten aus der Gruppe bestehend aus (S), (T), (U), (V), (W), (X), (Y) und (Z) ausgewählt sind.

Es ist bevorzugt, dass der Massenanteil aller Einheiten (S), (T), (U), (V), (W), (X), (Y) und (Z) zusammengenommen bezogen auf die Gesamtmasse des mindestens einen hydrierten polyethermodifizierten Polybutadiens (H) mindestens 50 %, noch bevorzugter mindestens 60%, noch bevorzugter mindestens 70%, bevorzugt mindestens 80%, noch bevorzugter mindestens 90%, noch bevorzugter mindestens 95%, noch bevorzugter mindestens 99%, besonders bevorzugt 100% beträgt.

Es ist bevorzugt, dass das hydrierte polyethermodifizierte Polybutadien (H) im Wesentlichen oder vollständig aus den Einheiten (S), (T), (U), (V), (W), (X), (Y) und (Z) besteht. Es ist besonders bevorzugt, dass das hydrierte polyethermodifizierte Polybutadien (H) im Wesentlichen oder vollständig aus den Einheiten (S), (T), (U), (V) und (W) besteht.

Es ist besonders bevorzugt, dass die hydrierten polyethermodifizierten Polybutadiene (H) dadurch gekennzeichnet sind, dass der Massenanteil der Einheiten (S) bezogen auf die Gesamtmasse aller Einheiten (S), (T), (U) mindestens 95 % beträgt.

Ganz besonders bevorzugt sind solche polyethermodifizierten Polybutadiene (H) die sich von den oben beschriebenen Polybutadienen Polyvest® 110 und Polyvest® 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse der Reste B von 100 g/mol bis 20000 g/mol, bevorzugter von 200 g/mol bis 15000 g/mol, besonders bevorzugt von 400 g/mol bis 10000 g/mol beträgt. Die mittlere Molmasse der Reste B kann aus der Einwaage der eingesetzten Monomere bezogen auf die Anzahl der OH-Gruppen des eingesetzten hydroxyfunktionellen Polybutadiens (E) berechnet werden. Werden also beispielsweise 40 g Ethylenoxid eingesetzt und weist die Menge des eingesetzten hydroxyfunktionellen Polybutadiens (E) 0,05 mol OH-Gruppen auf, so beträgt die mittlere Molmasse des Rests B 800 g/mol.

Die hydrierten polyethermodifizierten Polybutadiene (H) sind je nach Zusammensetzung und Molmasse flüssig, pastös oder fest.

Die zahlenmittlere Molmasse ($M_n$) der polyethermodifizierten Polybutadiene (H) beträgt bevorzugt von 300 g/mol bis 60000 g/mol, bevorzugter von 1000 g/mol bis 15000 g/mol, noch bevorzugter von 1500 g/mol bis 10000 g/mol, besonders bevorzugt von 2000 g/mol bis 5000 g/mol.

Ihre Polydispersität ist in weiten Bereichen variabel. Die Polydispersität des mindestens einen polyethermodifizierten Polybutadiens (H) bevorzugt bei $M_w/M_n$ von 1,5 bis 15, bevorzugter zwischen 2 und 10, besonders bevorzugt zwischen 3 und 8.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

**Beispiele:**

Allgemeine Methoden:

*Gel-Permeations-Chromatographie (GPC):*

GPC-Messungen zur Bestimmung der Polydispersität ($M_w/M_n$), der gewichtsmittleren Molmasse ($M_w$) und der zahlenmittleren Molmasse ($M_n$) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

*Bestimmung des Gehalts der 1,4-cis-, 1,4-trans- und 1,2-Einheiten im Polybutadien:*

Die Bestimmung des Gehalts an 1,4-cis-, 1,4-trans- und 1,2-Einheiten kann mit Hilfe der $^1$H-NMR-Spektroskopie erfolgen. Diese Methode ist dem Fachmann geläufig.

*Bestimmung des Gehalts an Epoxidgruppen im epoxyfunktionellen Polybutadien (C) (Epoxidgehalt, Epoxidierungsgrad):*

Die Bestimmung des Gehalts an Epoxidgruppen erfolgte mit Hilfe der $^{13}$C-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen epoxidierten und nicht epoxidierten Butadien-Einheiten. Dies entspricht der Anzahl der Epoxidgruppen des epoxyfunktionellen Polybutadiens (C) dividiert durch die Anzahl der Doppelbindungen des eingesetzten Polybutadiens (A).

*Bestimmung des Hydrierungsgrades:*

Die Bestimmung des Hydrierungsgrades erfolgte mit Hilfe der $^1$H-NMR-Spektroskopie. Verwendet wurde ein NMR-Spektrometer vom Typ Bruker Avance 400. Die Proben wurden dazu in Deuterochloroform gelöst.

Zunächst wurde der Gehalt an Doppelbindungen des polyethermodifizierten Polybutadiens (G) (also vor der Hydrierung) bestimmt, sowie der Gehalt der Doppelbindungen des hydrierten, polyethermodifizierten Polybutadiens (H) nach der Hydrierung. Hierzu wurden die Integrale der $^1$H-NMR-Spektren zwischen 4,8 und 6,3 ppm vor und nach der Hydrierung bestimmt, welche proportional zur Anzahl der Doppelbindungen des Polybutadiens ("PB") vor ($I_{PB,vor}$) bzw. nach ($I_{PB,nach}$) der Hydrierung sind. Diese Integrale wurden zwecks Normierung dabei in Relation zu den Integralen der $^1$H-NMR-Spektren zwischen 2,8 und 4,2 bezogen, die proportional zur (unveränderlichen) Anzahl der Wasserstoffatome des Polyetherrückens ("PE") sind, auch hier jeweils vor ($I_{PE,vor}$) bzw. nach ($I_{PE,nach}$) der Hydrierung. Der Hydrierungsgrad wird anschließend über die folgende Gleichung bestimmt:

$$\text{Hydrierungsgrad} = 1 - [(I_{PB,nach}/I_{PE,nach}) / (I_{PB,vor}/I_{PE,vor})]$$

$I_{PB,nach}$ = Integral des $^1$H-NMR-Spektrums zwischen 4,8 und 6,3 ppm nach der Hydrierung

$I_{PE,nach}$ = Integral des $^1$H-NMR-Spektrums zwischen 2,8 und 4,2 ppm nach der Hydrierung

$I_{PB,vor}$ = Integral des $^{1}$H-NMR-Spektrums zwischen 4,8 und 6,3 ppm vor der Hydrierung

$I_{PE,vor}$ = Integral des $^{1}$H-NMR-Spektrums zwischen 2,8 und 4,2 ppm vor der Hydrierung

*Bestimmung der Säurezahl:*

Die Säurezahlbestimmung wurde nach einem Titrationsverfahren in Anlehnung an die DIN EN ISO 2114 durchgeführt.

*Bestimmung der Farbaufhellung:*

Die Farbaufhellung wurde anhand der Änderung der Gardner-Farbzahl (bestimmt gemäß DIN ISO 4630) ermittelt.

Synthesebeispiele:

*Schritt a), Herstellung epoxidierter Polybutadiene*

Beispiel A1:

Zur Herstellung eines epoxidierten Polybutadiens wurde ein Polybutadien der Formel (1) mit der Struktur x=1%, y=24% und z=75% eingesetzt (Polyvest® 110). Nach dem Stand der Technik wurden in einem 2,5L-Vierhalskolben unter einer Stickstoffatmosphäre 800 g Polyvest® 110 und 43,2 g konz. Ameisensäure in 800 g Chloroform bei Raumtemperatur vorgelegt. Anschließend wurden 160 g 30%-ige $H_2O_2$-Lösung (30 Gew.-% $H_2O_2$ bezogen auf die Gesamtmasse der wässrigen Lösung) langsam zugetropft und die Lösung dann für 7,5 Stunden auf 50 °C erhitzt. Nach Ende der Reaktion wurde auf Raumtemperatur abgekühlt, die organische Phase abgetrennt und diese noch viermal mit dest. $H_2O$ gewaschen. Überschüssiges Chloroform und restliches Wasser wurden abdestilliert. Es wurden 755 g des Produktes erhalten, welches mit 1000 ppm Irganox® 1135 versetzt und unter Stickstoff gelagert wurde.

Die Auswertung mittels $^{13}$C-NMR ergab einen Epoxidierungsgrad von ca. 8,3% der Doppelbindungen.
$M_w$ = 4817 g/mol ; $M_n$ = 1997 g/mol ; $M_w/M_n$ = 2,4

Beispiel A2:

Nach dem in Beispiel A1 beschriebenen Verfahren wurden im 2L-Vierhalskolben 800 g Polyvest® 110 und 43,2 g konz. Ameisensäure in 800 g Chloroform vorgelegt und mit 24 g 30%-iger $H_2O_2$ Lösung (30 Gew.- % $H_2O_2$ bezogen auf die Gesamtmasse der wässrigen Lösung) versetzt. Nach 8 Stunden bei 50 °C, Phasentrennung, waschen mit dest. $H_2O$ und anschließender Destillation wurden 746 g eines epoxidierten Polybutadiens mit einem Epoxidierungsgrad von ca. 8,6% der Doppelbindungen gemäß $^{13}$C-NMR-Analyse erzielt.
$M_w$ = 4444 g/mol ; $M_n$ = 1940 g/mol ; $M_w/M_n$ = 2,3

Beispiel A3:

Nach dem in Beispiel A1 beschriebenen Verfahren wurden in einem 5L-Vierhalskolben 1500 g Polyvest® 110 und 81 g konz. Ameisensäure in 1500 g Chloroform vorgelegt und mit 300 g 30%-iger $H_2O_2$ Lösung (30 Gew.-% $H_2O_2$ bezogen auf die Gesamtmasse der wässrigen Lösung) versetzt. Nach 6,5 Stunden bei 50 °C, Phasentrennung, waschen mit dest. $H_2O$ und anschließender Destillation wurden 1453 g eines epoxidierten Polybutadiens mit einem Epoxidierungsgrad von ca. 7,6% der Doppelbindungen gemäß $^{13}$C-NMR-Analyse erzielt.
$M_w$ = 4698 g/mol ; $M_n$ = 1982 g/mol ; $M_w/M_n$ = 2,4

Beispiel A4:

Nach dem in Beispiel A1 beschriebenen Verfahren wurden in einem 5L-Vierhalskolben 1500 g Polyvest® 110 und 81 g konz. Ameisensäure in 1500 g Chloroform vorgelegt und mit 300 g 30%-iger $H_2O_2$ Lösung (30 Gew.-% $H_2O_2$ bezogen auf die Gesamtmasse der wässrigen Lösung) versetzt. Nach 6,5 Stunden bei 50 °C, Phasentrennung, waschen mit dest. $H_2O$ und anschließender Destillation wurden 1462 g eines epoxidierten Polybutadiens mit einem Epoxidierungsgrad von ca. 8,3% der Doppelbindungen gemäß $^{13}$C-NMR-Analyse erzielt.
$M_w$ = 4464 g/mol ; $M_n$ = 1898 g/mol ; $M_w/M_n$ = 2,4

*Schritt b), Herstellung OH-funktioneller Polybutadiene*

Beispiel B1:

Zur Herstellung eines hydroxylierten Polybutadiens mit einem Hydroxylierungsgrad von ca. 8,3% wurde das in Beispiel A1 hergestellte epoxidierte Polybutadien eingesetzt. Der Hydroxylierungsgrad ist dabei die Anzahl der OH-Gruppen des OH-funktionellen Polybutadiens dividiert durch die Anzahl der Doppelbindungen des in Schritt a) eingesetzten Polybutadiens. Zur Herstellung wurden in einem Vierhalskolben unter einer Stickstoffatmosphäre 750 g des epoxidierten Polybutadiens in 750 g iso-Butanol vorgelegt und unter Rühren mit 80wppm Trifluormethansulfonsäure (bezogen auf Masse epoxidiertes Polybutadien) gelöst in iso-Butanol (1%ige Lösung, also 1 Gew.-% Trifluormethansulfonsäure bezogen auf die Gesamtmasse der Lösung) versetzt. Anschließend wurde auf 70 °C erhitzt und das Gemisch für 5 Stunden bei dieser Temperatur gerührt. Während der Reaktion klart das Reaktionsgemisch auf. Nach beendeter Reaktion wurde auf Raumtemperatur abgekühlt und die Lösung durch Zugabe von 33,5 mg festem $NaHCO_3$ neutralisiert und anschließend filtriert. Der überschüssige Alkohol wurde im Vakuum abdestilliert. Der durch Destillation zurückgewonnene und ggf. getrocknete Alkohol kann bei Folgesynthesen wiedereingesetzt werden. Es wurden 785 g eines bräunlichen Produkts erhalten, welches mit 1000 ppm Irganox® 1135 versetzt und unter Stickstoff gelagert wurde.

Die Auswertung mittels $^{13}$C-NMR ergab einen vollständigen Umsatz aller Epoxidgruppen woraus sich ein Hydroxylierungsgrad von ca. 8,3% ergibt.

$M_w$ = 9201 g/mol ; $M_n$ = 2426 g/mol ; $M_w/M_n$ = 3,8

Beispiel B2:

Zur Herstellung eines hydroxylierten Polybutadiens mit einem Hydroxylierungsgrad von ca. 8,6% wurden nach dem in Beispiel B1 beschriebenen Verfahren 725 g des in Beispiel A2 hergestellten epoxidierten Polybutadiens in 725 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 4,5-stündigem Rühren bei 70 °C wurde das Reaktionsgemisch bei Raumtemperatur (RT) mit 33,5 mg festem $NaHCO_3$ neutralisiert, filtriert und der überschüssige Alkohol im Vakuum abdestilliert. Es wurden 749 g eines bräunlichen Produkts erhalten, welches mit 1000 ppm Irganox® 1135 versetzt und unter Stickstoff gelagert wurde.

Die Auswertung mittels $^{13}$C-NMR ergab einen vollständigen Umsatz aller Epoxidgruppen woraus sich ein Hydroxylierungsgrad von ca. 8,6% ergibt.

$M_w$ = 10305 g/mol ; $M_n$ = 2483 g/mol ; $M_w/M_n$ = 4,2

Beispiel B3:

Zur Herstellung eines hydroxylierten Polybutadiens mit einem Hydroxylierungsgrad von ca. 7,6% wurden nach dem in Beispiel B1 beschriebenen Verfahren 1400 g des in Beispiel A3 hergestellten epoxidierten Polybutadiens in 1400 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 7-stündigem Rühren bei 70 °C wurde das Reaktionsgemisch bei RT mit 62,7 mg festem $NaHCO_3$ neutralisiert, filtriert und der überschüssige Alkohol im Vakuum abdestilliert. Es wurden 1455,6 g eines bräunlichen Produkts erhalten, welches mit 1000 ppm Irganox® 1135 versetzt und unter Stickstoff gelagert wurde.

Die Auswertung mittels $^{13}$C-NMR ergab einen vollständigen Umsatz aller Epoxidgruppen woraus sich ein Hydroxylierungsgrad von ca. 7,6% ergibt.

$M_w$ = 7441 g/mol ; $M_n$ = 2231 g/mol ; $M_w/M_n$ = 3,3

Beispiel B4:

Zur Herstellung eines hydroxylierten Polybutadiens mit einem Hydroxylierungsgrad von ca. 8,3% wurden nach dem in Beispiel B1 beschriebenen Verfahren 1350 g des in Beispiel A4 hergestellten epoxidierten Polybutadiens in 1350 g iso-Butanol vorgelegt und unter Rühren mit 80wppm Trifluormethansulfonsäure (bezogen auf Masse epoxidiertes Polybutadien) gelöst in iso-Butanol (1%ige Lösung) versetzt. Nach 7-stündigem Rühren bei 70 °C wurde das Reaktionsgemisch bei RT mit 60,5 mg festem $NaHCO_3$ neutralisiert, filtriert und der überschüssige Alkohol im Vakuum abdestilliert. Es wurden 1342,1 g eines bräunlichen Produkts erhalten, welches mit 1000 ppm Irganox® 1135 versetzt und unter Stickstoff gelagert wurde.

Die Auswertung mittels $^{13}$C-NMR ergab einen vollständigen Umsatz aller Epoxidgruppen woraus sich ein Hydroxylierungsgrad von ca. 8,3% ergibt.

$M_w$ = 8277 g/mol ; $M_n$ = 2340 g/mol ; $M_w/M_n$ = 3,5

*Schritt c), Alkoxylierung OH-funktioneller Polybutadiene*

Beispiel C1:

In einem 3 Liter Autoklaven wurden 253 g des in Beispiel B1 hergestellten hydroxylierten Polybutadiens und 7,2 g 30%-iger Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Ein Gemisch aus 106 g Ethylenoxid sowie 696 g Propylenoxid wurden kontinuierlich und unter Kühlen in 17 h bei 115 °C und max. 3,5 bar Reaktorinnendruck (absolut) zudosiert. An die 2 stündige Nachreaktion bei 115 °C schloss sich die Entgasung an. Flüchtige Anteile wie restliches Ethylenoxid und Propylenoxid wurden im Vakuum abdestilliert. Das Produkt wurde auf 95 °C abgekühlt, mit 30%-iger $H_3PO_4$ auf eine Säurezahl von 0,1 mg KOH/g neutralisiert und mit 1000 ppm Irganox® 1135 versetzt. Wasser wurde in einer Vakuumdestillation entfernt und ausgefallene Salze abfiltriert. Es wurden 980 g des mittelviskosen und orange-farbenen, klaren alkoxylierten Polybutadiens isoliert und unter Stickstoff gelagert.
$M_w$ = 13388 g/mol ; $M_n$ = 3321 g/mol ; $M_w/M_n$ = 5,1

Beispiel C2:

In einem 3 Liter Autoklaven wurden 455 g des in Beispiel B2 hergestellten hydroxylierten Polybutadiens und 25,9 g 30%-iger Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Anschließend wurden 752 g Propylenoxid kontinuierlich und unter Kühlen in 12 h bei 115 °C und max. 3,5 bar Reaktorinnendruck (absolut) zudosiert. An die 3,5 stündige Nachreaktion bei 115 °C schloss sich die Entgasung an. Flüchtige Anteile wie restliches Propylenoxid wurden im Vakuum abdestilliert. Das Produkt wurde auf 95 °C abgekühlt, mit 30%-iger $H_3PO_4$ auf eine Säurezahl von 0,1 mg KOH/g neutralisiert und mit 1000 ppm Irganox® 1135 versetzt. Wasser wurde in einer Vakuumdestillation entfernt und ausgefallene Salze abfiltriert. Es wurden 1134 g des mittelviskosen und orange-farbenen, klaren alkoxylierten Polybutadiens isoliert und unter Stickstoff gelagert.
$M_w$ = 15903 g/mol ; $M_n$ = 2672 g/mol ; $M_w/M_n$ = 6,0

Beispiel C3:

In einem 3 Liter Autoklaven wurden 710 g des in Beispiel B3 hergestellten hydroxylierten Polybutadiens und 32,3 g 30%-iger Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Anschließend wurden 1559 g Propylenoxid kontinuierlich und unter Kühlen in 10,5 h bei 115 °C und max. 3,5 bar Reaktorinnendruck (absolut) zudosiert. An die 5 stündige Nachreaktion bei 115 °C schloss sich die Entgasung an. Flüchtige Anteile wie restliches Propylenoxid wurden im Vakuum abdestilliert. Das Produkt wurde auf 95 °C abgekühlt und eine Teilmenge von 1397 g abgelassen. Diese wurde mit 30%-iger $H_3PO_4$ auf eine Säurezahl von 0,1 mg KOH/g neutralisiert und mit 1000 ppm Irganox® 1135 versetzt. Wasser wurde in einer Vakuumdestillation entfernt und ausgefallene Salze abfiltriert. Es wurden 1175 g des mittelviskosen und orange-farbenen, klaren alkoxylierten Polybutadiens isoliert und unter Stickstoff gelagert.
$M_w$ = 18236 g/mol ; $M_n$ = 3037 g/mol ; $M_w/M_n$ = 6,0

Beispiel C4:

Die in Beispiel C3 im Reaktor verbliebene Menge von 882 g des noch alkalischen, alkoxylierten Polybutadiens wurde erneut auf 115°C geheizt und es wurden weitere 606 g Propylenoxid innerhalb von 7 Stunden kontinuierlich addiert. Nach einer zweistündige Nachreaktion bei 115°C schloss sich die Entgasung an. Flüchtige Anteile wie restliches Propylenoxid wurden im Vakuum abdestilliert. Das Produkt wurde auf 95 °C abgekühlt, mit 30%-iger H3PO4 auf eine Säurezahl von 0,1 mg KOH/g neutralisiert und mit 1000 ppm Irganox® 1135 versetzt. Wasser wurde in einer Vakuumdestillation entfernt und ausgefallene Salze abfiltriert. Es wurden 1407 g des mittelviskosen und orange-farbenen, klaren alkoxylierten Polybutadiens isoliert und unter Stickstoff gelagert.
$M_w$ = 19573 g/mol ; $M_n$ = 2968 g/mol ; $M_w/M_n$ = 6,6

Beispiel C5:

In einem 3 Liter Autoklaven wurden 415 g des in Beispiel B4 hergestellten hydroxylierten Polybutadiens und 20,2 g 30%-iger Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Anschließend wurden 974 g Propylenoxid kontinuierlich und unter Kühlen in 11 h bei 115 °C und max. 3,5 bar Reaktorinnendruck (absolut) zudosiert. An die einstündige Nachreaktion bei 115 °C schloss sich die Entgasung an. Flüchtige Anteile wie restliches Propylenoxid wurden im Vakuum abdestilliert. Das Produkt wurde auf 95 °C abgekühlt, mit 30%-iger $H_3PO_4$ auf eine Säurezahl von 0,1 mg KOH/g neutralisiert und mit 1000 ppm Irganox® 1135 versetzt. Wasser wurde in einer Vakuumdestillation entfernt und ausgefallene Salze abfiltriert. Es wurden 1472 g des mittelviskosen und orange-farbenen, klaren alkoxylierten Polybutadiens isoliert und unter Stickstoff gelagert.
$M_w$ = 20130 g/mol ; $M_n$ = 2928 g/mol ; $M_w/M_n$ = 6,9

*Schritt d), Hydrierung der polyethermodifizierten Polybutadiene*

Beispiel D1:

In einem 250 ml Vierhalskolben wurden 120 g des in Beispiel C1 hergestellten alkoxylierten, hydroxylierten Polybutadiens und 0,006 g Zitronensäure sowie 1,2 g Wasser unter Argon vorgelegt. Dann wurden 6,0 g Raney-Nickel (Aluminium/Nickel 50/50) und 1,2 Palladiumkatalysator Pd-Kat/C (5% Pd auf Aktivkohle, 50% Wassergehalt) zugegeben. Nach Aufheizen auf 120 °C wird unter starkem Argonstrom und Rühren 12 h lang 0,15 lpm (lpm = Liter pro Minute) Wasserstoff eingeleitet. Das bei Erkalten feste Produkt wird mit je 100 g Ethanol/Xylol verdünnt und nach Zugabe von 2,4 g Filterhilfe Harbolite 800 (von Alfa Aeser GmbH & Co KG) heiß filtriert. Auf der Filterplatte bleibt Gel zurück. Die filtrierte flüssige Phase wird nochmals über einem feineren Filter filtriert und im Vakuum destilliert. Man erhält 98 g eines braunschwarzen trüben Produktes, welches beim Erkalten fest wird. Der Hydrierungsgrad beträgt 99,7 %.
$M_w$ = 20250 g/mol ; $M_n$ = 3156 g/mol ; $M_w/M_n$ = 6,42

Beispiel D2:

In einem 500 ml Vierhalskolben wurden 143 g des in Beispiel C2 hergestellten alkoxylierten, hydroxylierten Polybutadiens mit 143 g Butylacetat und 0,0071 g Zitronensäure sowie 1,43 g Wasser unter Argon vorgelegt. Dann wurden 1,43 g Palladiumkatalysator Pd-Kat/C (5% Pd auf Aktivkohle, 50% Wassergehalt) zugegeben. Nach Aufheizen auf 120 °C wird unter starkem Argonstrom und Rühren 14 h lang 0,15 lpm Wasserstoff eingeleitet. Das bei Erkalten feste Produkt wird nochmals mit 100 g Butylacetat verdünnt und nach Zugabe von 1,5 g Filterhilfe Harbolite 800 heiß filtriert. Nach der Destillation im Vakuum erhält man ein braunschwarzes trübes Produkt, welches beim Erkalten fest wird. Der Hydrierungsgrad beträgt 93,6 %.
$M_w$ = 16327 g/mol ; $M_n$ = 2394 g/mol ; $M_w/M_n$ = 6,82

Beispiel D3:

In einem 500 ml Vierhalskolben wurden 250 g des in Beispiel C3 hergestellten alkoxylierten, hydroxylierten Polybutadiens mit 250 g Butylacetat unter Argon vorgelegt. Dann wurden 12,5 g Raney-Nickel (Aluminium/Nickel 50/50) und 2,5 g Palladiumkatalysator Pd-Kat/C (5% Pd auf Aktivkohle, 50% Wassergehalt) zugegeben. Nach aufheizen auf 120 °C wird unter starkem Argonstrom und Rühren 20 h lang 0,10 lpm Wasserstoff eingeleitet. Das Produkt wird nochmals mit 50 g Butylacetat verdünnt und nach Zugabe von 7,5 g Filterhilfe Harbolite 800 heiß filtriert. Nach der Destillation im Vakuum erhält man eines braunschwarzen Produktes, welches beim Erkalten fest wird. Der Hydrierungsgrad beträgt 98,6 %.
$M_w$ = 17567 g/mol ; $M_n$ = 2690 g/mol ; $M_w/M_n$ = 6,53

Beispiel D4:

In einem 500 ml Vierhalskolben wurden 125 g des in Beispiel C3 hergestellten alkoxylierten, hydroxylierten Polybutadiens mit 125 g Butylacetat unter Argon vorgelegt. Dann wurden 1,25 g Palladiumkatalysator Pd-Kat/C (5% Pd auf Aktivkohle, 50% Wassergehalt) zugegeben. Nach aufheizen auf 120 °C wird unter starkem Argonstrom und Rühren 19 h lang 0,05 - 0,10 lpm Wasserstoff eingeleitet. Das Produkt wird nochmals mit 50 g Xylol verdünnt und nach Zugabe von 3,75 g Filterhilfe Harbolite 800 heiß filtriert. Nach der Destillation im Vakuum erhält man 111 g eines braunschwarzen trüben Produktes, welches beim Erkalten fest wird. Der Hydrierungsgrad beträgt 97,5 %.
$M_w$ = 17504 g/mol ; $M_n$ = 2720 g/mol ; $M_w/M_n$ = 6,44

Beispiel D5:

In einem 500 ml Vierhalskolben wurden 125 g des in Beispiel C3 hergestellten alkoxylierten, hydroxylierten Polybutadiens mit 125 g Xylol unter Argon vorgelegt. Dann wurden 1,25 g Palladiumkatalysator Pd-Kat/C (5% Pd auf Aktivkohle, 50% Wassergehalt) zugegeben. Nach Aufheizen auf 120 °C wird unter starkem Argonstrom und Rühren 28 h lang 0,05 - 0,10 lpm Wasserstoff eingeleitet. Das Produkt wird nochmals mit 50 g Xylol verdünnt und nach Zugabe von 3,75 g Filterhilfe Harbolite 800 heiß filtriert. Nach der Destillation im Vakuum erhält man 112 g eines braunschwarzen Produktes, welches beim Erkalten fest wird. Der Hydriergrad beträgt 91,2 %.
$M_w$ = 19011 g/mol ; $M_n$ = 2921 g/mol ; $M_w/M_n$ = 6,51

Beispiel D6:

In einem 500 ml Vierhalskolben wurden 92,2 g des in Beispiel C3 hergestellten alkoxylierten, hydroxylierten Polybutadiens mit 276,6 g Butylacetat unter Argon vorgelegt. Dann wurden 0,92 g Palladiumkatalysator Pd-Kat/C (5% Pd auf Aktivkohle, 50% Wassergehalt) zugegeben. Nach Aufheizen auf 120 °C wird unter starkem Argonstrom und Rühren 22 h lang 0,05 - 0,10 lpm Wasserstoff eingeleitet. Nach Zugabe von 2,8 g Filterhilfe Harbolite 800 heiß filtriert. Nach der Destillation im Vakuum erhält man 82 g eines braunschwarzen Produktes, welches beim Erkalten fest wird. Der Hydrierungsgrad beträgt 98,5 %.
$M_w$ = 16574 g/mol ; $M_n$ = 2637 g/mol ; $M_w/M_n$ = 6,29

Beispiel D7:

In einem 350 ml Druckreaktor wurden 125 g des in Beispiel C4 hergestellten alkoxylierten, hydroxylierten Polybutadiens mit 125 g Butylacetat unter Argon vorgelegt. Dann wurden 6,25 g Raney-Nickel (Aluminium/Nickel 50/50) und 1,25 g Palladiumkatalysator Pd-Kat/C (5% Pd auf Aktivkohle, 50% Wassergehalt) zugegeben. Nach Inertisieren aufheizen auf 140 °C und unter Rühren wird diskontinuierlich 40 h lang bei 5 - 8 bar Wasserstoff aufgedrückt. Nach Ende einer Wasserstoffaufnahme wird eine Probe filtriert und destilliert. Man erhält ein braunschwarzes Produkt, welches beim Erkalten fest wird. Der Hydrierungsgrad beträgt 47,4 %.
$M_w$ = 20107 g/mol ; $M_n$ = 3197 g/mol ; $M_w/M_n$ = 6,29

Beispiel D8:

In einem 2000 ml Vierhalskolben wurden 493 g des in Beispiel C4 hergestellten alkoxylierten, hydroxylierten Polybutadiens mit 493 g Butylacetat unter Argon vorgelegt. Dann wurden 24,66 g Raney-Nickel (Aluminium/Nickel 50/50) und 4,93 g Palladiumkatalysator Pd-Kat/C (5% Pd auf Aktivkohle, 50% Wassergehalt) zugegeben. Nach aufheizen auf 120 °C wird unter starkem Argonstrom und Rühren 30 h lang 0,10 - 0,15 lpm Wasserstoff eingeleitet. Das Produkt wird nochmals mit 197 g Xylol verdünnt und nach Zugabe von 14,8 g Filterhilfe Harbolite 800 heiß filtriert. Nach der Destillation im Vakuum erhält man 458 g eines braunschwarzen Produktes, welches beim Erkalten fest wird. Der Hydrierungsgrad beträgt 92,3 %.
$M_w$ = 17933 g/mol ; $M_n$ = 2687 g/mol ; $M_w/M_n$ = 6,67

Beispiel D9:

In einem 500 ml Vierhalskolben wurden 50 g des in Beispiel C5 hergestellten alkoxylierten, hydroxylierten Polybutadiens zusammen mit 150 g Xylol vorgelegt und 1,5 g Rhodium-100 (Wilkinson-Katalysator) unter Rühren zugesetzt. Nach Aufheizen auf 120 °C wird unter starkem Argonstrom und Rühren 10 h lang 0,025 - 0,05 lpm (lpm = Liter pro Minute) Wasserstoff eingeleitet. Nach Zugabe von 1,5 g Filterhilfe Harbolite 800 wird heiß filtriert. Die filtrierte flüssige Phase wird im Vakuum destilliert. Man erhält 46 g eines braunschwarzen trüben Produktes, welches beim Erkalten fest wird. Der Hydrierungsgrad beträgt 97,8 %.
$M_w$ = 17225 g/mol ; $M_n$ = 2754 g/mol ; $M_w/M_n$ = 6,25

Beispiel D10:

In einem 500 ml Vierhalskolben wurden 50 g des in Beispiel C5 hergestellten alkoxylierten, hydroxylierten Polybutadiens zusammen mit 150 g Xylol vorgelegt und 2,5 g Ruthenium auf Aktivkohle (Typ H105 XBA) unter Rühren zugesetzt. Nach Aufheizen auf 120 °C wird unter starkem Argonstrom und Rühren 27 h lang 0,025 - 0,05 lpm (lpm = Liter pro Minute) Wasserstoff eingeleitet. Nach Zugabe von 1,5 g Filterhilfe Harbolite 800 wird heiß filtriert. Die filtrierte flüssige Phase wird im Vakuum destilliert. Man erhält 41 g eines braunschwarzen trüben Produktes, welches beim Erkalten

zähflüssig wird. Der Hydrierungsgrad beträgt 42,0 %.
$M_w$ = 16630 g/mol ; $M_n$ = 2988 g/mol ; $M_w/M_n$ = 5,55

## Patentansprüche

1. Verfahren zur Herstellung von einem oder mehreren hydrierten polyethermodifizierten Polybutadienen, umfassend die Schritte:

   a) Umsetzung mindestens eines Polybutadiens (A) mit mindestens einem Epoxidierungsreagenz (B) zu mindestens einem epoxyfunktionellen Polybutadien (C);
   b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
   c) Umsetzung des mindestens einen hydroxyfunktionellen Polybutadiens (E) mit mindestens einer epoxyfunktionellen Verbindung (F) zu mindestens einem polyethermodifizierten Polybutadien (G);
   d) Hydrierung des mindestens einen polyethermodifizierten Polybutadiens (G) zu mindestens einem hydrierten polyethermodifizierten Polybutadien (H).

2. Verfahren nach Anspruch 1, weiterhin umfassend genau einen der beiden Schritte:

   cc) Umsetzung mindestens eines polyethermodifizierten Polybutadiens (G) ohne endverkappte Polyetherreste mit mindestens einem Endverkappungsreagenz (I) zu mindestens einem polyethermodifizierten Polybutadien (G) enthaltend endverkappte Polyetherreste;
   dd) Umsetzung mindestens eines hydrierten polyethermodifizierten Polybutadiens (H) ohne endverkappte Polyetherreste mit mindestens einem Endverkappungsreagenz (I) zu mindestens einem hydrierten polyethermodifizierten Polybutadien (H) enthaltend endverkappte Polyetherreste.

3. Verfahren nach einem der Ansprüche 1 oder 2, **dadurch gekennzeichnet, dass** im Schritt a) >0 % bis <100 %, bevorzugt >0 % bis 70 %, bevorzugter 1 % bis 50 %, noch bevorzugter 2 % bis 40 %, noch bevorzugter 3% bis 30 % und besonders bevorzugt 4 % bis 20 % der Doppelbindungen des mindestens einen Polybutadiens (A) epoxidiert werden.

4. Verfahren nach einem der Ansprüche 1 bis 3, **dadurch gekennzeichnet, dass** das mindestens eine Epoxidierungsreagenz (B) Perameisensäure ist oder enthält, welche vorzugweise *in situ* aus Ameisensäure und Wasserstoffperoxid gebildet wird.

5. Verfahren nach einem der Ansprüche 1 bis 4, **dadurch gekennzeichnet, dass** die mindestens eine hydroxyfunktionelle Verbindungen (D) ausgewählt ist aus der Gruppe der monofunktionellen Alkohole mit 1 bis 6 Kohlenstoffatomen, bevorzugt aus der Gruppe der monofunktionellen Alkohole mit 2 bis 4 Kohlenstoffatomen, besonders bevorzugt aus der Gruppe bestehend aus Ethanol, 1-Propanol, Isopropanol, 1-Butanol, 2-Butanol und Isobutanol.

6. Verfahren nach einem der Ansprüche 1 bis 5, **dadurch gekennzeichnet, dass** die mindestens eine im Schritt c) eingesetzte epoxyfunktionelle Verbindung ausgewählt ist

   a. aus der Gruppe der Alkylenoxide,

      bevorzugt aus der Gruppe der Alkylenoxide mit 2 bis 18 Kohlenstoffatomen,
      besonders bevorzugt ausgewählt aus der Gruppe bestehend aus Ethylenoxid, Propylenoxid, 1-Butylenoxid, cis-2-Butylenoxid, trans-2-Butylenoxid, Isobutylenoxid und Styroloxid,
      und/oder

   b. aus der Gruppe der Glycidylverbindungen,

      bevorzugt aus der Gruppe der monofunktionellen Glycidylverbindungen,
      besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, $C_{12}/C_{14}$-Fettalkoholglycidylether und $C_{13}/C_{15}$-Fettalkoholglycidylether.

7. Verfahren nach einem der Ansprüche 1 bis 6, **dadurch gekennzeichnet, dass** im Verfahrensschritt d) von den

Doppelbindungen des polyethermodifizierten Polybutadiens (G) mindestens 30%, bevorzugt mindestens 60%, bevorzugter mindestens 90%, besonders bevorzugt mindestens 95% hydriert werden.

**8.** Verfahren nach einem der Ansprüche 1 bis 7, **dadurch gekennzeichnet, dass** Schritt d) mit Wasserstoff in Gegenwart mindestens eines Hydrierkatalysators, vorzugsweise auf Basis von Nickel, Palladium, Rhodium und/oder Ruthenium, insbesondere ausgewählt aus der Gruppe bestehend aus Raney-Nickel, Palladium auf Aktivkohle und Wilkinson-Katalysator, durchgeführt wird.

**9.** Hydriertes polyethermodifiziertes Polybutadien (H) erhältlich nach einem Verfahren nach einem der Ansprüche 1 bis 8.

**10.** Hydriertes polyethermodifiziertes Polybutadien (H), vorzugsweise nach Anspruch 9, **dadurch gekennzeichnet, dass** das hydrierte polyethermodifizierte Polybutadien (H) Einheiten ausgewählt

sowohl aus der Gruppe bestehend aus den zweibindigen Resten (S), (T) und (U):

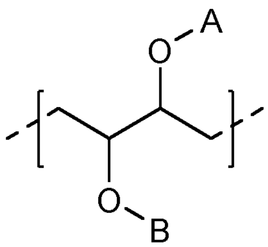
(S)

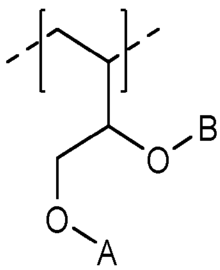
(T)

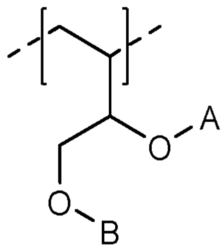
(U)

als auch aus der Gruppe bestehend aus den zweibindigen Resten (V) und (W):

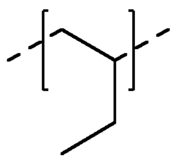
(V)

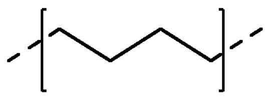
(W)

und optional aus der Gruppe bestehend aus den zweibindigen Resten (X), (Y) und (Z):

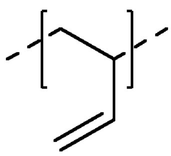
(X)

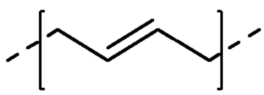
(Y)

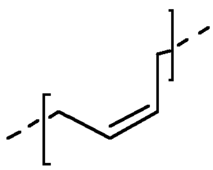
(Z)

umfasst;
wobei

A jeweils unabhängig voneinander ein einbindiger organischer Rest oder ein Wasserstoffrest ist, bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
B jeweils unabhängig voneinander ausgewählt ist aus der Gruppe bestehend aus Resten der Formel (4a),

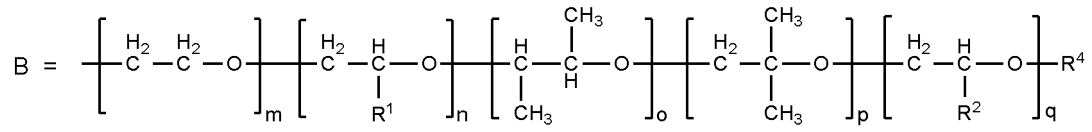

Formel (4a),

bevorzugt jeweils unabhängig voneinander ausgewählt ist aus der Gruppe bestehend aus Resten der Formel (4b),

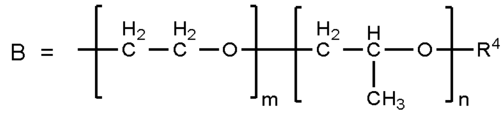

Formel (4b),

besonders bevorzugt jeweils unabhängig voneinander ausgewählt ist aus der Gruppe bestehend aus Resten der Formel (4c),

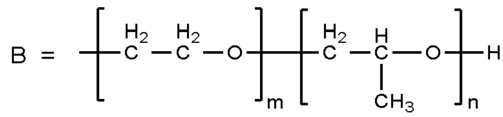

Formel (4c);

$R^1$ jeweils unabhängig voneinander ausgewählt ist aus der Gruppe bestehend aus einbindigen Kohlenwasserstoffresten mit 1 bis 16 Kohlenstoffatomen,

bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;

$R^2$ ein Rest der Formel $-CH_2-O-R^3$ ist;
$R^3$ jeweils unabhängig voneinander ausgewählt ist aus der Gruppe bestehend aus einbindigen Kohlenwasserstoffresten mit 3 bis 18 Kohlenstoffatomen;

bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
besonders bevorzugt ein tert-Butylphenylrest oder ein o-Kresylrest ist;

$R^4$ jeweils unabhängig voneinander ein einbindiger organischer Rest mit 1 bis 18 Kohlenstoffatomen oder Wasserstoff, bevorzugt Wasserstoff ist;

und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
und jede Permutation der Einheiten im Rest B, deren Anzahl mit den Indizes m, n, o, p beziehungsweise q angegeben ist, mitumfasst ist.

**11.** Hydriertes polyethermodifiziertes Polybutadien (H) nach Anspruch 10, **dadurch gekennzeichnet, dass** die Summe aller Einheiten (S), (T) und (U) dividiert durch die Summe aller Einheiten (S), (T), (U), (V), (W), (X), (Y) und (Z) >0 %, bevorzugt >0 % bis <100 %, bevorzugter von >0 % bis 70 %, noch bevorzugter von 1 % bis 50 %, noch bevorzugter von 2 % bis 40 %, noch bevorzugter von 3 % bis 30 %, besonders bevorzugt von 4 % bis 20 % beträgt.

**12.** Hydriertes polyethermodifiziertes Polybutadien (H) nach einem der Ansprüche 10 oder 11, **dadurch gekennzeichnet**, das die Summe aller Einheiten (V) und (W) dividiert durch die Summe aller Einheiten (V), (W), (X), (Y) und (Z) des mindestens einen polyethermodifizierten Polybutadiens (H) mindestens 30%, bevorzugt mindestens 60 %, bevorzugter mindestens 90 %, besonders bevorzugt 95 % beträgt.

**13.** Hydriertes polyethermodifiziertes Polybutadien (H) nach einem der Ansprüche 9 bis 12, **dadurch gekennzeichnet, dass** die zahlenmittlere Molmasse $M_n$ des ursprünglichen Polybutadienteils von 200 g/mol bis 20000 g/mol, bevorzugt von 500 g/mol bis 10000 g/mol, besonders bevorzugt von 700 g/mol bis 5000 g/mol beträgt, bestimmt wie in der Beschreibung angegeben.

**14.** Hydriertes polyethermodifiziertes Polybutadien (H) nach einem der Ansprüche 10 bis 13, **dadurch gekennzeichnet, dass** die mittlere Molmasse des Rests B von 100 g/mol bis 20000 g/mol, bevorzugt von 200 g/mol bis 15000 g/mol, besonders bevorzugt von 400 g/mol bis 10000 g/mol beträgt, bestimmt wie in der Beschreibung angegeben.

**15.** Hydriertes polyethermodifiziertes Polybutadien (H) nach einem der Ansprüche 9 bis 14, **dadurch gekennzeichnet, dass** die zahlenmittlere Molmasse $M_n$ von 300 g/mol bis 60000 g/mol, bevorzugter von 1000 g/mol bis 15000 g/mol, noch bevorzugter von 1500 g/mol bis 10000 g/mol, besonders bevorzugt von 2000 g/mol bis 5000 g/mol, bestimmt wie in der Beschreibung angegeben.

## Claims

**1.** Process for preparing one or more hydrogenated polyether-modified polybutadienes, comprising the steps of:

a) reacting at least one polybutadiene (A) with at least one epoxidizing reagent (B) to give at least one epoxy-functional polybutadiene (C);
b) reacting the at least one epoxy-functional polybutadiene (C) with at least one hydroxy-functional compound (D) to give at least one hydroxy-functional polybutadiene (E);
c) reacting the at least one hydroxy-functional polybutadiene (E) with at least one epoxy-functional compound (F) to give at least one polyether-modified polybutadiene (G);
d) hydrogenating the at least one polyether-modified polybutadiene (G) to give at least one hydrogenated polyether-modified polybutadiene (H).

**2.** Process according to Claim 1, further comprising precisely one of the two steps of:

cc) reacting at least one polyether-modified polybutadiene (G) without end-capped polyether radicals with at least one end-capping reagent (I) to give at least one polyether-modified polybutadiene (G) comprising end-capped polyether radicals;
dd) reacting at least one hydrogenated polyether-modified polybutadiene (H) without end-capped polyether radicals with at least one end-capping reagent (I) to give at least one hydrogenated polyether-modified polybutadiene (H) comprising end-capped polyether radicals.

**3.** Process according to either of Claims 1 and 2, **characterized in that** in step a) >0% to <100%, preferably >0% to 70%, more preferably 1% to 50%, even more preferably 2% to 40%, even more preferably 3% to 30% and particularly preferably 4% to 20% of the double bonds of the at least one polybutadiene (A) are epoxidized.

**4.** Process according to any of Claims 1 to 3, **characterized in that** the at least one epoxidizing reagent (B) is or comprises performic acid, which is preferably formed *in situ* from formic acid and hydrogen peroxide.

**5.** Process according to any of Claims 1 to 4, **characterized in that** the at least one hydroxy-functional compound (D) is selected from the group of the monofunctional alcohols having 1 to 6 carbon atoms, preferably from the group of the monofunctional alcohols having 2 to 4 carbon atoms, particularly preferably from the group consisting of ethanol, 1-propanol, isopropanol, 1-butanol, 2-butanol and isobutanol.

**6.** Process according to any of Claims 1 to 5, **characterized in that** the at least one epoxy-functional compound used in step c) is selected

a. from the group of the alkylene oxides,

preferably from the group of the alkylene oxides having 2 to 18 carbon atoms,
particularly preferably selected from the group consisting of ethylene oxide, propylene oxide, 1-butylene oxide, cis-2-butylene oxide, trans-2-butylene oxide, isobutylene oxide and styrene oxide,

and/or
b. from the group of the glycidyl compounds,

preferably from the group of the monofunctional glycidyl compounds,
particularly preferably from the group consisting of phenyl glycidyl ether, o-cresyl glycidyl ether, tert-butylphenyl glycidyl ether, allyl glycidyl ether, butyl glycidyl ether, 2-ethylhexyl glycidyl ether, $C_{12}/C_{14}$ fatty alcohol glycidyl ether and $C_{13}/C_{15}$ fatty alcohol glycidyl ether.

**7.** Process according to any of Claims 1 to 6, **characterized in that** in process step d) at least 30%, preferably at least 60%, more preferably at least 90%, particularly preferably at least 95% of the double bonds of the polyether-modified polybutadiene (G) are hydrogenated.

**8.** Process according to any of Claims 1 to 7, **characterized in that** step d) is carried out with hydrogen in the presence of at least one hydrogenation catalyst, preferably based on nickel, palladium, rhodium and/or ruthenium, in particular selected from the group consisting of Raney nickel, palladium on activated carbon and Wilkinson's catalyst.

**9.** Hydrogenated polyether-modified polybutadiene (H) obtainable by a process according to any of Claims 1 to 8.

**10.** Hydrogenated polyether-modified polybutadiene (H), preferably according to Claim 9, **characterized in that** the hydrogenated polyether-modified polybutadiene (H) comprises units selected

both from the group consisting of the divalent radicals (S), (T) and (U):

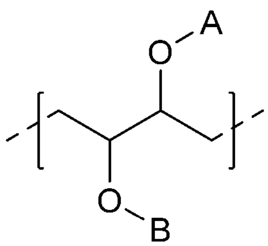
(S)

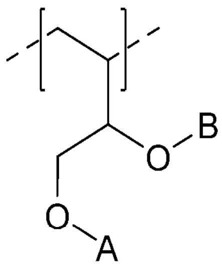
(T)

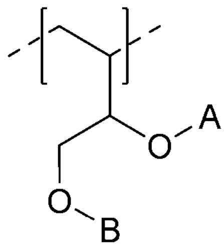
(U)

and from the group consisting of the divalent radicals (V) and (W):

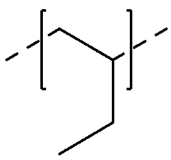
(V)

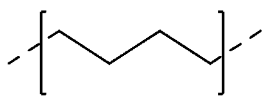
(W)

and optionally from the group consisting of the divalent radicals (X), (Y) and (Z):

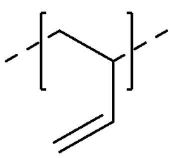
(X)

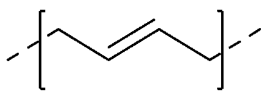
(Y)

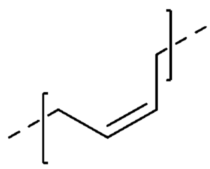
(Z)

where

A is in each case independently a monovalent organic radical or a hydrogen radical, preferably is in each case independently selected from the group consisting of monovalent hydrocarbon radicals having 1 to 6 carbon atoms, particularly preferably is in each case independently selected from the group consisting of alkyl radicals having 1 to 4 carbon atoms;
B is in each case independently selected from the group consisting of radicals of the formula (4a),

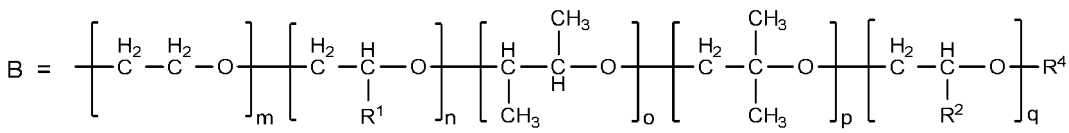

formula (4a),

preferably is in each case independently selected from the group consisting of radicals of the formula (4b),

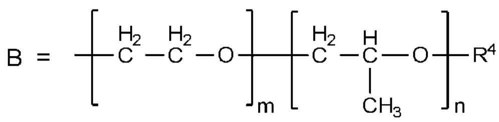

formula (4b),
particularly preferably is in each case independently selected from the group consisting of radicals of the formula (4c),

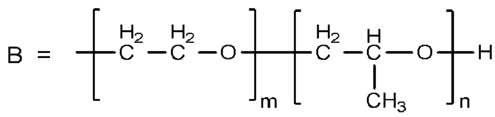

formula (4c);

$R^1$ is in each case independently selected from the group consisting of monovalent hydrocarbon radicals having 1 to 16 carbon atoms, preferably is in each case independently an alkyl radical having 1 to 16 carbon atoms or a phenyl radical, particularly preferably is in each case independently a methyl radical, an ethyl radical or a phenyl radical;
$R^2$ is a radical of the formula $-CH_2-O-R^3$;
$R^3$ is in each case independently selected from the group consisting of monovalent hydrocarbon radicals having 3 to 18 carbon atoms; preferably is in each case independently an allyl radical, a butyl radical, an alkyl radical having 8 to 15 carbon atoms or a phenyl radical that may be substituted by monovalent radicals selected from hydrocarbon radicals having 1 to 4 carbon atoms; particularly preferably is a tert-butylphenyl radical or an o-cresyl radical;
$R^4$ is in each case independently a monovalent organic radical having 1 to 18 carbon atoms or hydrogen, preferably hydrogen;
and
m, n, o, p and q are each independently 0 to 300, preferably 0 to 200, particularly preferably 0 to 100, with the proviso that the sum total of m, n, o, p and q is greater than 1, preferably greater than 5, particularly preferably greater than 10;
and each permutation of the units in the radical B, the number of which is specified by the indices m, n, o, p and q, is included.

**11.** Hydrogenated polyether-modified polybutadiene (H) according to Claim 10, **characterized in that** the sum total of all units (S), (T) and (U) divided by the sum total of all units (S), (T), (U), (V), (W), (X), (Y) and (Z) is >0%, preferably >0% to <100%, more preferably from >0% to 70%, even more preferably from 1% to 50%, even more preferably from 2% to 40%, even more preferably from 3% to 30%, particularly preferably from 4% to 20%.

**12.** Hydrogenated polyether-modified polybutadiene (H) according to either of Claims 10 and 11, **characterized in that** the sum total of all units (V) and (W) divided by the sum total of all units (V), (W), (X), (Y) and (Z) of the at least one polyether-modified polybutadiene (H) is at least 30%, preferably at least 60%, more preferably at least 90%, particularly preferably 95%.

**13.** Hydrogenated polyether-modified polybutadiene (H) according to any of Claims 9 to 12, **characterized in that** the number-average molar mass $M_n$ of the original polybutadiene moiety is from 200 g/mol to 20 000 g/mol, preferably from 500 g/mol to 10 000 g/mol, particularly preferably from 700 g/mol to 5000 g/mol, determined as specified in the description.

**14.** Hydrogenated polyether-modified polybutadiene (H) according to any of Claims 10 to 13, **characterized in that** the average molar mass of the radical B is from 100 g/mol to 20 000 g/mol, preferably from 200 g/mol to 15 000 g/mol, particularly preferably from 400 g/mol to 10 000 g/mol, determined as specified in the description.

**15.** Hydrogenated polyether-modified polybutadiene (H) according to any of Claims 9 to 14, **characterized in that** the number-average molar mass $M_n$ is from 300 g/mol to 60 000 g/mol, more preferably from 1000 g/mol to 15 000 g/mol, even more preferably from 1500 g/mol to 10 000 g/mol, particularly preferably from 2000 g/mol to 5000 g/mol, determined as specified in the description.

**Revendications**

**1.** Procédé de préparation d'un ou de plusieurs polybutadiènes hydrogénés modifiés par polyéther, comprenant les étapes :

a) transformation d'au moins un polybutadiène (A) avec au moins un réactif d'époxydation (B), en au moins un polybutadiène à fonction époxy (C) ;
b) transformation dudit au moins un polybutadiène à fonction époxy (C) avec au moins un composé à fonction hydroxy (D) en au moins un polybutadiène à fonction hydroxy (E) ;
c) transformation dudit au moins un polybutadiène à fonction hydroxy (E) avec au moins un composé à fonction époxy (F) en au moins un polybutadiène modifié par polyéther (G) ;
d) hydrogénation dudit au moins un polybutadiène modifié par polyéther (G) en au moins un polybutadiène hydrogéné modifié par polyéther (H).

**2.** Procédé selon la revendication 1, comprenant en outre exactement au moins l'une des deux étapes :

cc) transformation d'au moins un polybutadiène modifié par polyéther (G) sans radicaux polyéther à extrémités bloquées avec au moins un réactif de blocage d'extrémités (I) en au moins un polybutadiène modifié par polyéther (G) contenant des radicaux polyéther à extrémités bloquées ;
dd) transformation d'au moins un polybutadiène hydrogéné modifié par polyéther (H) sans radicaux polyéther à extrémités bloquées avec au moins un réactif de blocage d'extrémités (I) en au moins un polybutadiène hydrogéné modifié par polyéther (H) contenant des radicaux polyéther à extrémités bloquées.

**3.** Procédé selon l'une des revendications 1 ou 2, **caractérisé en ce que**, dans l'étape a) >0% à <100%, de préférence >0% à 70%, plus préférablement 1% à 50%, encore plus préférablement 2% à 40%, encore plus préférablement 3% à 30% et le plus préférablement 4% à 20% des doubles liaisons dudit au moins un polybutadiène (A) ont été époxydés.

**4.** Procédé selon l'une des revendications 1 à 3, **caractérisé en ce que** ledit au moins un réactif d'époxydation (B) est ou contient de l'acide performique, qui est de préférence formé *in situ* à partir d'acide formique et de peroxyde d'hydrogène.

**5.** Procédé selon l'une des revendications 1 à 4, **caractérisé en ce que** ledit au moins un composé à fonction hydroxy (D) est choisi dans le groupe des alcools monofonctionnels comprenant 1 à 6 atomes de carbone, de préférence dans le groupe des alcools monofonctionnels comprenant 2 à 4 atomes de carbone, de manière particulièrement préférée dans le groupe constitué par l'éthanol, le 1-propanol, l'isopropanol, le 1-butanol, le 2-butanol et l'isobutanol.

**6.** Procédé selon l'une des revendications 1 à 5, **caractérisé en ce que** ledit au moins un composé à fonctionnalité époxy utilisé dans l'étape c) est choisi

a. dans le groupe des oxydes d'alkylène,

de préférence dans le groupe des oxydes d'alkylène comprenant 2 à 18 atomes de carbone,
de manière particulièrement préférée dans le groupe constitué par l'oxyde d'éthylène, l'oxyde de propylène, l'oxyde de 1-butylène, l'oxyde de cis-2-butylène, l'oxyde de trans-2-butylène, l'oxyde d'isobutylène et l'oxyde de styrène,

et/ou
b. dans le groupe des composés de glycidyle,

de préférence dans le groupe des composés de glycidyle monofonctionnels,
de manière particulièrement préférée dans le groupe constitué par l'éther glycidylique de phényle, l'éther glycidylique d'o-crésyle, l'éther glycidylique de tert-butylphényle, l'éther glycidylique d'allyle, l'éther glycidylique de butyle, l'éther glycidylique de 2-éthylhexyle, les éthers glycidyliques d'alcools gras en $C_{12}/C_{14}$ et les éthers glycidyliques d'alcools gras en $C_{13}/C_{15}$.

**7.** Procédé selon l'une des revendications 1 à 6, **caractérisé en ce que**, dans l'étape de procédé d), au moins 30%, de préférence au moins 60%, plus préférablement au moins 90%, de manière particulièrement préférée au moins 95% des doubles liaisons du polybutadiène modifié par polyéther (G) sont hydrogénés.

**8.** Procédé selon l'une des revendications 1 à 7, **caractérisé en ce que** l'étape d) est réalisée avec de l'hydrogène en présence d'au moins un catalyseur d'hydrogénation, de préférence à base de nickel, de palladium, de rhodium et/ou de ruthénium, en particulier choisi dans le groupe constitué par le nickel de Raney, le palladium sur charbon actif et le catalyseur de Wilkinson.

**9.** Polybutadiène hydrogéné modifié par polyéther (H) pouvant être obtenu par un procédé selon l'une des revendications 1 à 8.

**10.** Polybutadiène hydrogéné modifié par polyéther (H), de préférence selon la revendication 9, **caractérisé en ce que** le polybutadiène hydrogéné modifié par polyéther (H) comprend des motifs choisis

aussi bien dans le groupe constitué par les radicaux bivalents (S), (T) et (U) :

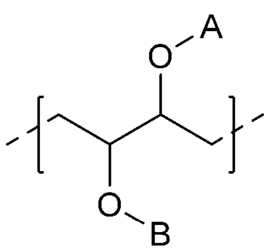
(S)

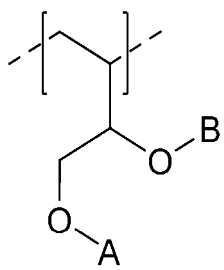
(T)

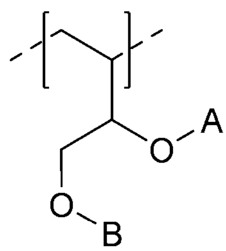
(U)

que dans le groupe constitué par les radicaux bivalents (V) et (W) :

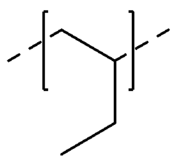
(V)

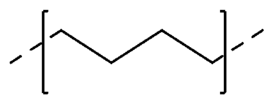
(W)

et éventuellement dans le groupe constitué par les radicaux bivalents (X), (Y) et (Z) :

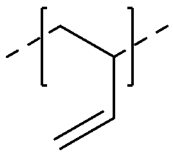 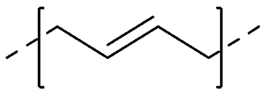 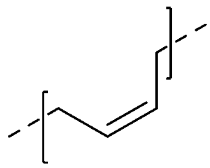

(X) (Y) (Z)

dans lesquels

A représente, à chaque fois indépendamment, un radical organique monovalent ou un radical hydrogène, est de préférence choisi, à chaque fois indépendamment, dans le groupe constitué par les radicaux hydrocarbonés monovalents comprenant 1 à 6 atomes de carbone,
est de manière particulièrement préférée choisi, à chaque fois indépendamment, dans le groupe constitué par les radicaux alkyle comprenant 1 à 4 atomes de carbone ;
B est choisi, à chaque fois indépendamment, dans le groupe constitué par les radicaux de formule (4a),

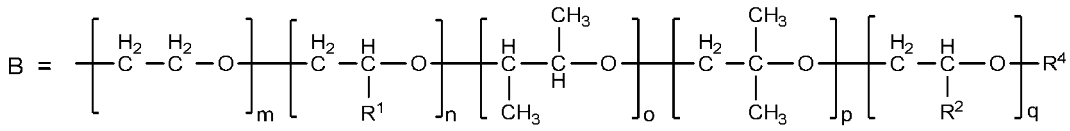

Formule (4a),

est de préférence choisi, à chaque fois indépendamment, dans le groupe constitué par les radicaux de formule (4b),

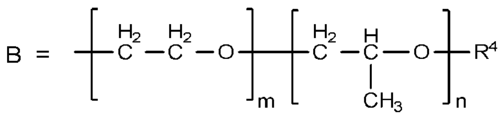

Formule (4b),

est de manière particulièrement préférée choisi, à chaque fois indépendamment, dans le groupe constitué par les radicaux de formule (4c),

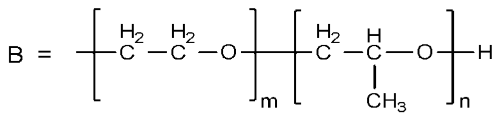

Formule (4c) ;

$R^1$ est choisi, à chaque fois indépendamment, dans le groupe constitué par les radicaux hydrocarbonés monovalents comprenant 1 à 16 atomes de carbone,
représente de préférence, à chaque fois indépendamment, un radical alkyle comprenant 1 à 16 atomes de carbone ou un radical phényle,
représente de manière particulièrement préférée, à chaque fois indépendamment, un radical méthyle, un radical éthyle ou un radical phényle ;
$R^2$ représente un radical de formule $-CH_2-O-R^3$ ;
$R^3$ est choisi, à chaque fois indépendamment, dans le groupe constitué par les radicaux hydrocarbonés monovalents comprenant 3 à 18 atomes de carbone ;
représente de préférence, à chaque fois indépendamment, un radical allyle, un radical butyle, un radical alkyle comprenant 8 à 15 atomes de carbone ou un radical phényle, qui peut être substitué par des radicaux monovalents choisis parmi les radicaux hydrocarbonés comprenant 1 à 4 atomes de carbone ;
représente, de manière particulièrement préférée, un radical tert-butylphényle ou un radical o-crésyle ;
$R^4$ représente, à chaque fois indépendamment, un radical organique monovalent comprenant 1 à 18 atomes de carbone ou un atome d'hydrogène, de préférence un atome d'hydrogène ;
et

m, n, o, p et q valent, à chaque fois indépendamment les uns des autres, 0 à 300, de préférence 0 à 200, de manière particulièrement préférée 0 à 100, étant entendu que la somme de m, n, o, p et q est supérieure à 1, de préférence supérieure à 5, de manière particulièrement préférée, supérieure à 10 ;
et chaque permutation des motifs dans le radical B, dont le nombre est indiqué par les indices m, n, o, p ou, selon le cas, q, est incluse.

**11.** Polybutadiène hydrogéné modifié par polyéther (H) selon la revendication 10, **caractérisé en ce que** la somme de tous les motifs (S), (T) et (U) divisée par la somme de tous les motifs (S), (T), (U), (V), (W), (X), (Y) et (Z) est >0%, de préférence >0% à <100%, plus préférablement >0% à 70%, encore plus préférablement de 1% à 50%, encore plus préférablement de 2% à 40%, encore plus préférablement de 3% à 30%, de manière particulièrement préférée de 4% à 20%.

**12.** Polybutadiène hydrogéné modifié par polyéther (H) selon l'une des revendications 10 ou 11, **caractérisé en ce que** la somme de tous les motifs (V) et (W) divisée par le somme de tous les motifs (V), (W), (X), (Y) et (Z) dudit au moins un polybutadiène modifié par polyéther (H) représente au moins 30%, de préférence au moins 60%, plus préférablement au moins 90%, de manière particulièrement préférée de 95%.

**13.** Polybutadiène hydrogéné modifié par polyéther (H) selon l'une des revendications 9 à 12, **caractérisé en ce que** la masse moléculaire moyenne en nombre ($M_n$) de la partie de polybutadiène initiale est de 200 g/mole à 20 000 g/mole, de préférence de 500 g/mole à 10 000 g/mole, de manière particulièrement préférée de 700 g/mole à 5000 g/mole, déterminée comme indiqué dans la description.

**14.** Polybutadiène hydrogéné modifié par polyéther selon l'une des revendications 10 à 13, **caractérisé en ce que** la masse moléculaire moyenne du radical B est de 100 g/mole à 20 000 g/mole, de préférence de 200 g/mole à 15 000 g/mole, de manière particulièrement préférée de 400 g/mole à 10 000 g/mole, déterminée comme indiqué dans la description.

**15.** Polybutadiène hydrogéné modifié par polyéther (H) selon l'une des revendications 9 à 14, **caractérisé en ce que** la masse moléculaire moyenne en nombre $M_n$ est de 300 g/mole à 60 000 g/mole, plus préférablement de 1000 g/mole à 15 000 g/mole, encore plus préférablement de 1500 g/mole à 10 000 g/mole, le plus préférablement de 2000 g/mole à 5000 g/mole, déterminée comme indiqué dans la description.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 2011038003 B
- JP 2002105209 B
- US 4994621 A
- EP 2003156 A1
- JP 53117030 B
- DE 2943879
- EP 351135 A
- DE 3305964
- DD 206286
- DE 3442200
- WO 2016142249 A1
- DE 2459115 A1
- DE 1248301 B
- DE 2457646 A1
- DE 2637767 A1
- EP 0279766 A1
- EP 0545844 A1
- CN 101538338
- JP 2004346310 B
- DD 253627
- US 5158922 A
- US 20030119663 A
- WO 0180994 A

### In der Beschreibung aufgeführte Nicht-Patentliteratur

- **Q. GAO**. *Macromolecular Chemistry and Physics*, 2013, vol. 214 (15), 1677-1687
- **J. WANG**. *Journal of Applied Polymer Science*, 2013, vol. 128 (4), 2408-2413
- **H. DECHER**. *Polymer International*, 1995, vol. 38 (3), 219-225
- **QING GAO**. *J. Macromol. Sci., Part A: Pure and Applied Chemistry*, 2013, vol. 50, 297-301